# EUROPÄISCHE PATENTSCHRIFT

(11) **EP 4 647 640 B1**
(45) Veröffentlichungstag und Bekanntmachung des Hinweises auf die Patenterteilung: **01.07.2026**
(21) Anmeldenummer: 24174341.8
(22) Anmeldetag: 06.05.2024
(51) Int. Cl.: F16L 55/035, F16L 3/24

(54) **ELASTISCHES DÄMPFUNGS- UND BEFESTIGUNGSELEMENT**
ELASTIC DAMPING AND FASTENING ELEMENT
ELÉMENT ÉLASTIQUE D'AMORTISSEMENT ET DE FIXATION

(43) Veröffentlichungstag der Anmeldung: 12.11.2025
(73) Patentinhaber: Poppe Elastomertechnik GmbH, 35392 Giessen (DE)
(72) Erfinder: FLADUNG, Niklas, 36167 Nüsttal (DE); KLINGELHÖFER, Hardy, 35644 Hohenahr (DE); SCHMIDT, Sebastian, 35396 Gießen (DE); LANGLOTZ, Lars, 99867 Gotha (DE); LEIB, Luca, 35649 Bischoffen (DE)
(74) Vertreter: Patentship Patentanwaltsgesellschaft mbH

(56) Entgegenhaltungen:
- EP-A1- 4 261 451
- DE-A1- 102016 116 238
- DE-A1- 102021 133 241
- US-A1- 2009 294 600

## Beschreibung

Die vorliegende Erfindung betrifft ein elastisches Dämpfungs- und Befestigungselement zum Dämpfen von Vibrationen einer Leitung, insbesondere einer fluidführenden Leitung oder einer elektrischen Leitung, und zur Befestigung an einer Befestigungsschiene. Die vorliegende Erfindung betrifft ferner ein elastisches Dämpfungs- und Befestigungssystem mit einem elastischen Dämpfungs- und Befestigungselement und einer Befestigungsschiene. Die vorliegende Erfindung betrifft ferner ein Verfahren zur Herstellung eines elastischen Dämpfungs- und Befestigungselements.

In unterschiedlichsten Anwendungen werden Leitungen, insbesondere fluidführende Leitungen oder elektrische Leitungen, beispielsweise in einem beengten Bauraum verwendet bzw. mit anderen die Leitung tragenden Bauteilen verbunden. Wird beispielsweise Fluid durch entsprechende fluidführende Leitungen geleitet können hierbei Vibrationen entstehen, welche sich beispielsweise auf andere mit den Leitungen verbundene Bauteile ausbreiten und zu unerwünschten Geräuschen führen können. Um zu verhindern, dass sich entsprechend auftretende Vibrationen von Leitungen auf andere mit den Leitungen verbundene Bauteile übertragen, können Dämpfungselemente an den Leitungen angebracht werden. Entsprechende Dämpfungselemente sind jedoch oftmals aufwendig herzustellen und zu montieren und können oftmals nicht ausreichend fest an den Leitungen befestigt werden. Zudem ist bei entsprechend herkömmlichen Dämpfungselementen oftmals keine direkte Anbindungsmöglichkeit an die mit dem Leitungen verbundenen Bauteile, wie beispielsweise Befestigungsschienen, vorhanden, was den Einsatzbereich entsprechender herkömmlicher Dämpfungselemente signifikant einschränkt.

Die Druckschrift EP 1 099 899 A2 beschreibt einen Schlauch zur Halterung von Rohrleitungen.

Die Druckschrift EP 4 261 451 A1 beschreibt ein elastisches Dämpfungselement mit einem an einer Außenwandung angeordnetem Befestigungselement.

Die Druckschrift US 2009/294600 A1 beschreibt eine Rohrklemme, die an einer U-Profilschiene montiert ist.

Es ist die der Erfindung zugrundeliegende Aufgabe, ein elastisches Dämpfungs- und Befestigungselement zum Dämpfen von Vibrationen einer Leitung bereitzustellen, welches vorteilhafte Dämpfungseigenschaften aufweist, welches an der Leitung wirksam befestigt werden kann, und welches zudem eine vorteilhafte Befestigungsanbindung zur Befestigung an einer Befestigungsschiene aufweist.

Diese Aufgabe wird durch die Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe gelöst durch ein elastisches Dämpfungs- und Befestigungselement zum Dämpfen von Vibrationen einer Leitung und zur Befestigung an einer Befestigungsschiene, mit: einem elastischen Hülsenring zum Umschließen der Leitung, wobei der elastische Hülsenring eine der Leitung zugewandte Innenwandung aufweist, welche einen Hülsenringinnenraum zum Aufnehmen der Leitung umschließt, wobei die Innenwandung ausgebildet sind, an der in dem Hülsenringinnenraum aufnehmbaren Leitung anzuliegen, um Vibrationen der Leitung zu dämpfen; und einem ersten Befestigungsvorsprung und einem zweiten Befestigungsvorsprung, welche einstückig mit dem elastische Hülsenring geformt sind, wobei der erste Befestigungsvorsprung einen ersten Einführschrägenbereich aufweist, welcher ausgebildet ist beim Einführen des ersten Befestigungsvorsprungs in einen Schieneninnenraum der Befestigungsschiene an einem ersten Schienenvorsprung der Befestigungsschiene entlang zu gleiten, und wobei der erste Befestigungsvorsprung eine dem ersten Einführschrägenbereich in Einführrichtung nachgelagerte erste Hinterschneidung aufweist, welche ausgebildet ist, zumindest einen Schienenvorsprung der Befestigungsschiene aufzunehmen, um die Befestigungsschiene an dem elastischen Dämpfungs- und Befestigungselement zu befestigen, wobei der zweite Befestigungsvorsprung einen zweiten Einführschrägenbereich aufweist, welcher ausgebildet ist, beim Einführen des zweiten Befestigungsvorsprungs in den Schieneninnenraum der Befestigungsschiene an einem zweiten Schienenvorsprung der Befestigungsschiene entlang zu gleiten, und wobei der zweite Befestigungsvorsprung eine dem zweiten Einführschrägenbereich in Einführrichtung nachgelagerte zweite Hinterschneidung aufweist, welche ausgebildet ist, zumindest einen Schienenvorsprung der Befestigungsschiene aufzunehmen, um die Befestigungsschiene an dem elastisches Dämpfungs- und Befestigungselement zu befestigen.

Dadurch wird der technische Vorteil erreicht, dass die beiden Befestigungsvorsprünge vorteilhaft in Einführrichtung in den Schieneninnenraum der Befestigungsschiene eingeführt werden können, und die beiden Befestigungsvorsprünge anschließend eine wirksame arretierende Befestigung des elastischen Dämpfungs- und Befestigungselements an der Befestigungsschiene ermöglichen. Ein Vorteil hierbei ist, dass für eine entsprechende arretierende Befestigung ohne eine zusätzliches Werkzeug montiert werden kann.

Beispielsweise ist die Befestigungsschiene an einer Unterseite offen, so dass sich in diesem Fall die Einführrichtung der Befestigungsvorsprünge von unterhalb der Befestigungsschiene durch die offene Unterseite der Befestigungsschiene in den Schieneninnenraum der Befestigungsschiene erstreckt.

Durch die jeweiligen Einführschrägenbereiche der Befestigungsvorsprünge wird ein wirksames Einführen der Befestigungsvorsprünge in den Schieneninnenraum der Befestigungsschiene derart ermöglicht, dass der jeweilige Schienenvorsprung der Befestigungsschiene über die jeweilige Einführschräge hinweg gleitet, so dass die Befestigungsvorsprünge abschnittsweise federelastisch ausgelenkt werden. Wenn der jeweilige Schienenvorsprung der Befestigungsschiene anschließend in die jeweilige Hinterschneidung eingreift, schnappen die federelastisch ausgelenkten Befestigungsvorsprünge zurück und fixieren die Schienenvorsprünge der Befestigungsschiene innerhalb der Hinterschneidung, wodurch eine wirksamer Festlegung des elastischen Dämpfungs- und Befestigungselements an der Befestigungsschiene erreicht wird.

Hierbei sind der erste und zweite Befestigungsvorsprung insbesondere aus einem zumindest abschnittsweise verformbaren Kunststoff, insbesondere einem zumindest abschnittsweise reversibel verformbaren Kunststoff, insbesondere aus einem elastischen Kunststoff ausgebildet.

Insbesondere sind der erste und zweite Befestigungsvorsprung als einander gegenüberliegende Befestigungsvorsprünge ausgebildet.

Offensichtlich stellt das elastische Dämpfungs- und Befestigungselement neben der bereits beschriebenen Befestigungsfunktion an der Befestigungsschiene noch eine weitere Funktionalität hinsichtlich eine wirksamen Schalldämpfung der in dem elastischen Hülsenring aufgenommenen Leitung bereit.

Hierbei wird durch die Innenwandung des elastischen Hülsenrings eine besonders wirksame Klemmwirkung auf die in dem Hülsenringinnenraum aufgenommene Leitung ausgeübt, so dass eine besonders wirksame Fixierung der Leitung durch das elastische Dämpfungs- und Befestigungselement erreicht wird und es kann eine wirksame Dämpfung von Vibrationen der Leitung erreicht werden. Dies wird beispielsweise dadurch erreicht, dass die Innenwandung des elastischen Hülsenrings aufgedehnt wird, um die Leitung in den Hülsenringinnenraum einzuschieben, wobei sich anschließend die Innenwandung aufgrund der Elastizität des elastischen Hülsenrings an die aufgenommene Leitung unter Spannung anlegt, um die wirksame Vibrationsdämpfung zu erreichen.

Somit stellt der elastische Hülsenring sicher, dass das elastische Dämpfungs- und Befestigungselement und die Leitung wirksam vibrationstechnisch entkoppelt sind, so dass sich Vibrationen von der Leitung nicht auf die Befestigungsschiene übertragen können.

Insbesondere umfasst die Leitung eine fluidführende Leitung, insbesondere eine fluidführende Leitung in einem Gebäude, insbesondere in Form von Schläuchen, Rohren und dergleichen, wie z.B. Wasserleitungen, Gasleitungen oder Stromleitungen. Beim Leiten von Fluid durch entsprechende Leitungen können unter Umständen Vibrationen und darauf basierend Geräusche entstehen, welche möglichst durch Bewohner des Gebäudes nicht wahrgenommen werden können. Um die Leitungen von der Gebäudewand vibrationstechnisch zu entkoppeln und damit zu verhindern, dass sich die Vibrationen von den Leitungen über entsprechende Befestigungsschienen auf die Gebäudewand übertragen, stellt das elastische Dämpfungs- und Befestigungselement sicher, dass eine ausreichende Dämpfung von Vibrationen ermöglicht wird.

Für den Fall, dass die in dem Hülseninnenraum des elastischen Hülsenrings aufgenommene Leitung eine elektrische Leitung umfasst, stellt das Kunststoffmaterial des elastischen Hülsenrings eine wirksame elektrische Isolation der elektrischen Leitung dar, und verhindert das Auftreten von Kurzschlüssen.

Insbesondere umfasst die Leitung eine elektrische Leitung, insbesondere eine Stromleitung oder eine Signalleitung in einem elektrischen Bauteil, oder eine Fluidleitung, insbesondere eine Wasser- oder Gasleitung.

Insbesondere ist der elastische Hülsenring des elastischen Dämpfungs- und Befestigungselements als ein in Umlaufrichtung des elastischen Hülsenrings verschließbarer Hülsenring geformt, so dass der elastische Hülsenring geöffnet werden kann, um die Leitung aufzunehmen, und so dass der elastische Hülsenring anschließend wieder verschlossen werden kann, um die in dem elastischen Hülsenring aufgenommene Leitung zu fixieren.

Insbesondere ist das elastische Dämpfungs- und Befestigungselement als ein Abstandshalter ausgebildet, welcher die in dem elastischen Hülsenring aufgenommene Leitung von anderen Bauteilen, wie z.B. der Befestigungsschiene beabstandet, um zu verhindern, dass die in dem elastischen Hülsenring aufgenommene Leitung in Kontakt mit den anderen Bauteilen, insbesondere der Befestigungsschiene, kommt.

In einer vorteilhaften Ausführungsform weist der elastische Hülsenring einen Verschlussabschnitt zum Schließen des elastischen Hülsenrings um die Leitung auf, wobei insbesondere an einem Einführbereich des Verschlussabschnitts ein Widerhaken gebildet ist, und wobei insbesondere an einem Aufnahmebereich des Verschlussabschnitts eine Aufnahmeöffnung zum Aufnehmen des Widerhakens gebildet ist.

Dadurch wird der technische Vorteil erreicht, dass durch das Einführen des Widerhakens in die Aufnahmeöffnung der elastische Hülsenring vorteilhaft um die aufgenommene Leitung geschlossen werden kann, was ein vorteilhaftes Aufnehmen der Leitung des elastischen Dämpfungs- und Befestigungselements auch nach der Befestigung an der Befestigungsschiene ermöglicht.

In einer vorteilhaften Ausführungsform sind der erste und zweite Befestigungsvorsprung jeweils an einer dem Hülsenringinnenraum abgewandten Aufnahmebereichsaußenseite des Aufnahmebereichs des Verschlussabschnitt, angeordnet, und/oder sind der erste und zweite Befestigungsvorsprung durch einen zwischen dem ersten und zweiten Befestigungsvorsprung verlaufenden Befestigungsvorsprungsspalt voneinander beabstandet.

Dadurch wird der technische Vorteil erreicht, dass durch die Anbindung des ersten und zweiten Befestigungsvorsprungs an der Aufnahmebereichsaußenseite eine Verbindung mit der Befestigungsschiene an einer von der Leitung abgewandten Seite des elastischen Dämpfungs- und Befestigungselements erreicht wird.

Durch den zwischen dem ersten und zweiten Befestigungsvorsprung verlaufenden Befestigungsvorsprungsspalt wird ein ausreichend großer Bauraum zwischen den beiden Befestigungsvorsprüngen bereitgestellt, damit beim Einführen der Befestigungsvorsprünge in den Schieneninnenraum der Befestigungsschiene die Befestigungsvorsprünge federelastisch in den Befestigungsvorsprungsspalt ausgelenkt werden, insbesondere aufeinander zu ausgelenkt werden.

In einer vorteilhaften Ausführungsform ist die erste Hinterschneidung zwischen dem ersten Einführschrägenbereich und dem Aufnahmebereich des Verschlussabschnitts, insbesondere der Aufnahmebereichsaußenseite des Aufnahmebereichs des Verschlussabschnitts, angeordnet, und ist die zweite Hinterschneidung zwischen dem zweiten Einführschrägenbereich und dem Aufnahmebereich des Verschlussabschnitts, insbesondere der Aufnahmebereichsaußenseite des Aufnahmebereichs des Verschlussabschnitts, angeordnet.

Dadurch wird der technische Vorteil erreicht, dass durch die Hinterschneidungen ein wirksames Festlegen der Schienenvorsprünge der Befestigungsschiene an der Oberseite des Verschlussabschnitts erreicht wird.

Erfindungsgemäß ist die erste Hinterschneidung als eine den ersten Befestigungsvorsprung zumindest abschnittsweise umlaufende erste Hinterschneidung geformt, wobei die erste Hinterschneidung insbesondere nicht an einer dem zweiten Befestigungsvorsprung zugewandten ersten Befestigungsvorsprungsinnenseite des ersten Befestigungsvorsprung geformt ist, und ist die zweite Hinterschneidung als eine den zweiten Befestigungsvorsprung zumindest abschnittsweise umlaufende zweite Hinterschneidung geformt ist, wobei die zweite Hinterschneidung insbesondere nicht an einer dem ersten Befestigungsvorsprung zugewandten zweiten Befestigungsvorsprungsinnenseite des zweiten Befestigungsvorsprung geformt ist.

Dadurch wird der technische Vorteil erreicht, dass nach dem Einführen und Fixieren der Befestigungsvorsprünge in dem Schieneninnenraum der Befestigungsschiene durch die zumindest abschnittsweise jeweils umlaufende Hinterschneidung dennoch eine Rotation der Befestigungsvorsprünge innerhalb des Schieneninnenraums der Befestigungsschiene um 90° möglich ist, ohne dass die Befestigungsvorsprünge der Befestigungsschiene bei der entsprechenden Rotation aus den Hinterschneidungen herausgleiten. Dies ermöglicht eine besonders flexible Anordnung der in dem elastischen Hülsenring aufgenommenen Leitung da die Orientierung der in dem elastischen Hülsenring aufgenommenen Leitung entweder parallel zu der Erstreckungsrichtung der Befestigungsschiene oder orthogonal zu der Erstreckungsrichtung der Befestigungsschiene festgelegt werden kann.

Insbesondere ist die jeweilige Hinterschneidung nicht an der jeweiligen Befestigungsvorsprungsinnenseite angeordnet, da die entsprechenden Befestigungsvorsprungsinnenseite jeweils dem anderen Befestigungsvorsprung zugewandt sind, und damit kein Raum für ein Eingreifen der jeweiligen Befestigungsschiene vorhanden ist.

Insbesondere ist die erste Hinterschneidung an einer der ersten Befestigungsvorsprungsinnenseite abgewandten ersten Befestigungsvorsprungsaußenseite geformt, wobei die erste Befestigungsvorsprungsaußenseite hierbei dem zweiten Befestigungsvorsprung, bzw. der ersten Befestigungsvorsprungsinnenseite abgewandt ist. Insbesondere ist die erste Hinterschneidung an einer die erste Befestigungsvorsprungsinnenseite und die erste Befestigungsvorsprungsaußenseite verbindenden ersten Befestigungsvorsprungsrückseite und/oder ersten Befestigungsvorsprungsvorderseite geformt.

Insbesondere ist die zweite Hinterschneidung an einer der zweiten Befestigungsvorsprungsinnenseite abgewandten zweiten Befestigungsvorsprungsaußenseite geformt, wobei die zweite Befestigungsvorsprungsinnenseite hierbei dem ersten Befestigungsvorsprung, bzw. der zweiten Befestigungsvorsprungsinnenseite abgewandt ist. Insbesondere ist die zweite Hinterschneidung an einer die zweite Befestigungsvorsprungsinnenseite und die zweite Befestigungsvorsprungsaußenseite verbindende zweite Befestigungsvorsprungsrückseite und/oder zweiten Befestigungsvorsprungsvorderseite geformt.

In einer vorteilhaften Ausführungsform weist der erste Einführschrägenbereich des ersten Befestigungsvorsprungs eine erste Befestigungsvorsprungsinnenseite auf, welche dem zweiten Befestigungsvorsprung zugewandt ist, wobei der erste Einführschrägenbereich einer der ersten Befestigungsvorsprungsinnenseite abgewandte erste Befestigungsvorsprungsaußenseite aufweist, in welcher eine erste Einführschräge gebildet ist, wobei die erste Einführschräge ausgebildet ist beim Einführen des ersten Befestigungsvorsprungs in den Schieneninnenraum der Befestigungsschiene den ersten Schienenvorsprung der Befestigungsschiene zu kontaktieren, und weist der zweite Einführschrägenbereich des zweiten Befestigungsvorsprungs eine zweite Befestigungsvorsprungsinnenseite auf, welche dem ersten Befestigungsvorsprung zugewandt ist, wobei der zweite Einführschrägenbereich einer der zweiten Befestigungsvorsprungsinnenseite abgewandte zweite Befestigungsvorsprungsaußenseite aufweist, in welcher eine zweite Einführschräge gebildet ist, wobei die zweite Einführschräge ausgebildet ist beim Einführen des zweite Befestigungsvorsprungs in den Schieneninnenraum der Befestigungsschiene den zweiten Schienenvorsprung der Befestigungsschiene zu kontaktieren.

Dadurch wird der technische Vorteil erreicht, dass ein wirksames Einführen der Befestigungsvorsprünge in den Schieneninnenraum der Befestigungsschiene ermöglicht wird.

In einer vorteilhaften Ausführungsform erstrecken sich der elastische Hülsenring in der Tiefe, insbesondere die Vorsprünge des elastischen Hülsenrings, entlang einer Ringlängsachse, welche sich parallel zu einer Leitungslängsrichtung der durch den elastischen Hülsenring umschließbaren Leitung erstreckt, wobei sich der erste Einführschrägenbereich, insbesondere die erste Einführschräge der ersten Befestigungsvorsprungsaußenseite des ersten Einführschrägenbereichs, in der Tiefe entlang einer ersten Schrägenlängsachse erstreckt, wobei sich der zweite Einführschrägenbereich, insbesondere die zweite Einführschräge der zweiten Befestigungsvorsprungsaußenseite des zweiten Einführschrägenbereichs, in der Tiefe entlang einer zweiten Schrägenlängsachse erstreckt, wobei sich die erste und zweite Schrägenlängsachse parallel zu der Ringlängsachse erstreckt, oder wobei sich die erste und zweite Schrägenlängsachse winklig, insbesondere rechtwinklig, zu der Ringlängsachse erstreckt.

Dadurch wird der technische Vorteil erreicht, dass hier zwei Bauteilorientierungen der Einführschrägenbereiche realisiert werden können. In der ersten Orientierung erstrecken sich die erste und zweite Schrägenlängsachse parallel zu der Ringlängsachse, so dass sich hier die Einführschrägen von der in dem elastischen Hülsenring aufgenommenen Leitung weg erstrecken. In der zweiten Orientierung erstrecken sich die erste und zweite Schrägenlängsachse winklig, insbesondere rechtwinklig, zu der Ringlängsachse, so dass sich hier die Einführschrägen auf die in dem elastischen Hülsenring aufgenommenen Leitung zu erstrecken. Je nach gewählter Bauteilorientierung verläuft die Leitung entweder parallel oder orthogonal zu der Befestigungsschiene.

In einer vorteilhaften Ausführungsform ist in der Innenwandung eine Mehrzahl von sich radial erstreckenden Ausnehmungen geformt, wobei zwischen zwei nebeneinander in der Innenwandung geformten Ausnehmungen jeweils ein sich in Richtung des Hülsenringinnenraums erstreckender Vorsprung geformt ist, wobei die Vorsprünge ausgebildet sind, an der in dem Hülsenringinnenraum aufnehmbaren Leitung anzuliegen, um Vibrationen der Leitung zu dämpfen.

Insbesondere sind die Vorsprünge des elastischen Hülsenrings als von der Innenwandung in Richtung des Hülsenringinnenraums spitz zulaufende Vorsprünge ausgebildet. Alternativ und insbesondere weisen die Vorsprünge des elastischen Hülsenrings jeweils eine an der Leitung anlegbare flächig ausgebildete Vorsprungoberseite auf.

Dadurch wird der technische Vorteil erreicht, dass je nach Anwendungsfall sowohl durch entsprechend spitz zulaufende Vorsprünge als auch durch entsprechende Vorsprünge mit einer flächig ausgebildeten Vorsprungoberseite eine wirksame Leitungsfixierung und Leitungsdämpfung erreicht wird.

In einer vorteilhaften Ausführungsform ist das elastische Dämpfungs- und Befestigungselement aus zumindest einem Thermoplast, zumindest einem Elastomer, und/oder zumindest einem thermoplastischen Elastomer (TPE) geformt.

Dadurch wird der technische Vorteil erreicht, dass durch die genannten Materialien wirksame verformbare Eigenschaften des elastischen Dämpfungs- und Befestigungselements ermöglicht werden.

Insbesondere umfassen sowohl der elastische Hülsenring, und insbesondere auch der Verschlussabschnitt, als auch die Befestigungsvorsprünge jeweils ein Elastomer, insbesondere ein Silikon. Insbesondere umfassen sowohl der elastische Hülsenring, und insbesondere auch der Verschlussabschnitt, als auch die Befestigungsvorsprünge jeweils ein thermoplastisches Elastomer (TPE).

Insbesondere umfasst der elastische Hülsenring ein Elastomer und/oder ein thermoplastisches Elastomer (TPE) und umfassen die Befestigungsvorsprünge, und insbesondere auch der Verschlussabschnitt, ein Thermoplast, insbesondere PP, PA oder PVC. Insbesondere umfasst der elastische Hülsenring ein thermoplastisches Elastomer (TPE) und umfassen die Befestigungsvorsprünge, und insbesondere auch der Verschlussabschnitt, ein Elastomer.

In einer vorteilhaften Ausführungsform weist der elastische Hülsenring eine gemäß der Norm DIN ISO 7619-1 bestimmte Shore-Härte zwischen 30 und 80 ShoreA, insbesondere zwischen 50 und 70 ShoreA auf, und weist der erste und zweite Befestigungsvorsprung eine gemäß der Norm DIN ISO 7619-1 bestimmte Shore-Härte zwischen 70 und 100 ShoreA, insbesondere zwischen 85 und 95 ShoreA auf.

Dadurch wird der technische Vorteil erreicht, dass der relativ weiche Hülsenring eine wirksame Vibrationsdämpfung ermöglicht, und dass die im Vergleich zum elastischen Hülsenring härteren Befestigungsvorsprünge eine ausreichend stabile Befestigung an der Befestigungsschiene sicherstellen, wobei natürlich immer noch eine ausreichende Verformbarkeit der Befestigungsvorsprünge vorhanden ist, und ein vorteilhaftes Einführen in den Schieneninnenraum der Befestigungsschiene zu ermöglichen.

Insbesondere weist der Verschlussabschnitt des elastischen Hülsenrings eine gemäß der Norm DIN ISO 7619-1 bestimmte Shore-Härte zwischen 70 und 100 ShoreA, insbesondere zwischen 85 und 95 ShoreA auf.

Gemäß einem zweiten Aspekt der Erfindung wird die Aufgabe gelöst durch ein elastisches Dämpfungs- und Befestigungssystem mit einem elastischen Dämpfungs- und Befestigungselement nach dem ersten Aspekt und einer Befestigungsschiene, welche einen durch eine Schienenwandung der Befestigungsschiene begrenzten Schieneninnenraum aufweist, wobei die Schienenwandung einen sich in den Schieneninnenraum erstreckenden ersten Schienenvorsprung aufweist, und wobei die Schienenwandung einen sich in den Schieneninnenraum erstreckenden zweiten Schienenvorsprung aufweist, wobei der erste Schienenvorsprung und der zweite Schienenvorsprung einander gegenüberliegend in der Befestigungsschiene geformt sind, wobei der erste Schienenvorsprung ausgebildet ist in die erste Hinterschneidung des ersten Befestigungsvorsprungs und/oder in die zweite Hinterschneidung des zweiten Befestigungsvorsprungs einzugreifen, und wobei der zweite Schienenvorsprung ausgebildet ist in die erste Hinterschneidung des ersten Befestigungsvorsprungs und/oder in die zweite Hinterschneidung des zweiten Befestigungsvorsprungs einzugreifen.

Dadurch wird der technische Vorteil erreicht, dass eine wirksame Fixierung des elastischen Dämpfungs- und Befestigungselements an der Befestigungsschiene erreicht wird.

Insbesondere sind die Befestigungsvorsprünge innerhalb der Befestigungsschiene rotierbar, insbesondere um eine Elementhochachse rotierbar, insbesondere um 90° rotierbar. Insbesondere ist die Elementhochachse als eine Normale der Außenbereichsaußenseite des Aufnahmebereichs des Verschlussabschnitts ausgebildet, wobei die Außenbereichsaußenseite dem Hülsenringinnenraum abgewandt ist.

Insbesondere ist der erste Schienenvorsprung in einer ersten Rotationsposition ausgebildet, in die erste Hinterschneidung des ersten Befestigungsvorsprungs und in die zweite Hinterschneidung des zweiten Befestigungsvorsprungs einzugreifen, und ist der zweite Schienenvorsprung in der ersten Rotationsposition ausgebildet, in die erste Hinterschneidung des ersten Befestigungsvorsprungs und in die zweite Hinterschneidung des zweiten Befestigungsvorsprungs einzugreifen.

Insbesondere ist der erste Schienenvorsprung in einer zweiten Rotationsposition, welche sich von der ersten Rotationsposition durch eine Rotation um 90° um die Elementhochachse unterscheidet, ausgebildet, in die erste Hinterschneidung des ersten Befestigungsvorsprungs einzugreifen, und ist der zweite Schienenvorsprung in der zweiten Rotationsposition ausgebildet, in die zweite Hinterschneidung des zweiten Befestigungsvorsprungs einzugreifen.

In einer vorteilhaften Ausführungsform umfasst das elastische Dämpfungs- und Befestigungssystem ferner eine Leitung, welche in dem durch die Innenwandung des elastischen Hülsenrings umschlossenen Hülsenringinnenraum aufgenommen ist.

Dadurch wird der technische Vorteil erreicht, dass eine wirksame geräuschentkoppelte Aufnahme der Leitung in dem elastischen Hülsenring erreicht wird.

Gemäß einem dritten Aspekt der Erfindung wird die Aufgabe gelöst durch ein Verfahren zum Herstellen eines elastischen Dämpfungs- und Befestigungselements, umfassend die folgenden Verfahrensschritte: Bereitstellen zumindest eines Kunststoffs, einstückiges Formen des elastischen Dämpfungs- und Befestigungselements in einem Formwerkzeug aus dem bereitgestellten zumindest einen Kunststoff, wobei das elastische Dämpfungs- und Befestigungselement einen elastischen Hülsenring zum Umschließen einer Leitung aufweist, wobei der elastische Hülsenring eine der Leitung zugewandte Innenwandung aufweist, welche einen Hülsenringinnenraum zum Aufnehmen der Leitung umschließt, wobei die Innenwandung ausgebildet ist, an der in dem Hülsenringinnenraum aufnehmbaren Leitung anzuliegen, um Vibrationen der Leitung zu dämpfen, und wobei das elastische Dämpfungs- und Befestigungselement einen ersten Befestigungsvorsprung und einen zweiten Befestigungsvorsprung aufweisen, welche einstückig mit dem elastische Hülsenring geformt sind, wobei der erste Befestigungsvorsprung einen ersten Einführschrägenbereich aufweist, welcher ausgebildet ist beim Einführen des ersten Befestigungsvorsprungs in einen Schieneninnenraum der Befestigungsschiene an einem ersten Schienenvorsprung der Befestigungsschiene entlang zu gleiten, und wobei der erste Befestigungsvorsprung eine dem ersten Einführschrägenbereich in Einführrichtung nachgelagerte erste Hinterschneidung aufweist, welche ausgebildet ist, den ersten Schienenvorsprung der Befestigungsschiene aufzunehmen, um die Befestigungsschiene an dem elastisches Dämpfungs- und Befestigungselement zu befestigen, wobei der zweite Befestigungsvorsprung einen zweiten Einführschrägenbereich aufweist, welcher ausgebildet ist beim Einführen des zweiten Befestigungsvorsprungs in einen Schieneninnenraum der Befestigungsschiene an einem zweiten Schienenvorsprung der Befestigungsschiene entlang zu gleiten, und wobei der zweite Befestigungsvorsprung eine dem zweiten Einführschrägenbereich in Einführrichtung nachgelagerte zweite Hinterschneidung aufweist, welche ausgebildet ist, zumindest einen Schienenvorsprung der Befestigungsschiene aufzunehmen, um die Befestigungsschiene an dem elastisches Dämpfungs- und Befestigungselement zu befestigen.

Dadurch wird der technische Vorteil erreicht, dass eine wirksame Herstellung des elastischen Dämpfungs- und Befestigungselements ermöglicht wird.

In einer vorteilhaften Ausführungsform umfasst das einstückige Formen des elastischen Dämpfungs- und Befestigungselements ein einstückiges Extrudieren des elastischen Dämpfungs- und Befestigungselements in einem Extrusionswerkzeug oder das einstückige Spitzgießen des elastischen Dämpfungs- und Befestigungselements in einem Spritzgusswerkzeug.

Dadurch wird der technische Vorteil erreicht, dass eine wirksame Herstellung des elastischen Dämpfungs- und Befestigungselements ermöglicht wird.

In einer vorteilhaften Ausführungsform umfasst das einstückige Formen des elastischen Dämpfungs- und Befestigungselements in dem Formwerkzeug das Bereitstellen von unterschiedlichen Maschinen- und Prozessparametern, insbesondere das Bereitstellen von unterschiedlichen Temperaturen und das Bereitstellen von unterschiedlichen Volumen, in unterschiedlichen Bereichen des Formwerkzeugs, so dass in dem hergestellten elastischen Dämpfungs- und Befestigungselements unterschiedliche Bereiche mit unterschiedlichen gemäß der Norm DIN ISO 7619-1 bestimmten Shore-Härten und Materialien vorhanden sind.

Dadurch wird der technische Vorteil erreicht, dass eine wirksame Herstellung des elastischen Dämpfungs- und Befestigungselements mit unterschiedlichen Bereichen ermöglicht, welche unterschiedliche Verformungseigenschaften aufweisen.

Ausführungsbeispiele der Erfindung sind in den Zeichnungen dargestellt und werden im Folgenden näher beschrieben.

Es zeigen:
- Fig. 1: eine Seitenansicht eines elastischen Dämpfungs- und Befestigungselements gemäß einer ersten Ausführungsform;
- Fig. 2: eine Seitenansicht eines elastischen Dämpfungs- und Befestigungssystems umfassend das in Fig. 1 dargestellte elastische Dämpfungs- und Befestigungselement, welches an einer Befestigungsschiene befestigt ist;
- Fig. 3: eine Seitenansicht eines elastischen Dämpfungs- und Befestigungssystems umfassend ein elastische Dämpfungs- und Befestigungselements gemäß einer zweiten Ausführungsform, welches an einer Befestigungsschiene befestigt ist;
- Fig. 4: eine Seitenansicht eines elastischen Dämpfungs- und Befestigungselements gemäß einer dritten Ausführungsform; und
- Fig. 5: eine schematische Darstellung eines Verfahrens zur Herstellung eines elastischen Dämpfungs- und Befestigungselements gemäß einer Ausführungsform.

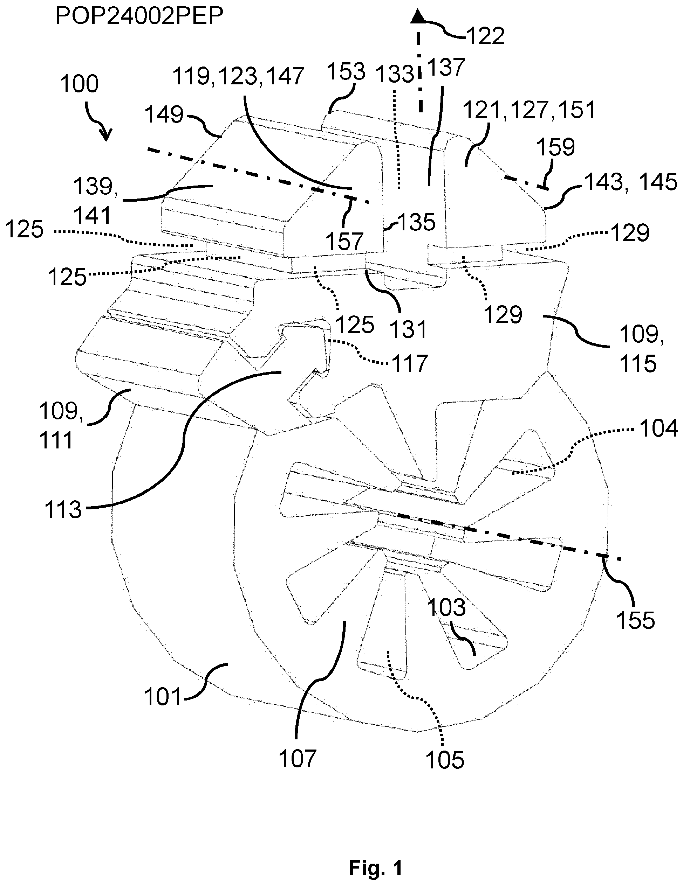

Fig. 1 zeigt eine Seitenansicht eines elastischen Dämpfungs- und Befestigungselements gemäß einer ersten Ausführungsform.

Das in Fig. 1 dargestellte elastische Dämpfungs- und Befestigungselement 100 dient zur Aufnahme einer in Fig. 1 nicht dargestellten Leitung, beispielsweise einer fluidführenden Leitung oder einer elektrischen Leitung, insbesondere einer Leitung mit einem Leitungsdurchmesser zwischen 5 mm und 20 mm, wobei jedoch alternativ auch ein elastisches Dämpfungs- und Befestigungselement 100 zur Aufnahme einer Leitung mit einem größeren Leitungsdurchmesser bereitgestellt werden kann. Das elastische Dämpfungs- und Befestigungselement 100 stellt hierbei sicher, dass die aufgenommene Leitung in Position gehalten wird, und etwaige außerhalb des elastischen Dämpfungs- und Befestigungselements 100 angeordnete Bauteile von entsprechenden Vibrationen der Leitung, beispielsweise bei einer fluidführenden Leitung vibrationstechnisch entkoppelt werden. Hierdurch werden akustische Geräusche entkoppelt und Schwingungen der in dem elastischen Dämpfungs- und Befestigungselement 100 aufgenommenen Leitung können nicht an die außerhalb angeordneten Bauteile weitergegeben werden. Sind entsprechende Leitungen als elektrische Leitungen ausgebildet und wird für die entsprechenden Leitungen jeweils ein elastisches Dämpfungs- und Befestigungselement 100 verwendet, kann durch die elastischen Dämpfungselemente 100 auch eine wirksame Beabstandung zwischen den elektrischen Leitungen sichergestellt werden, so dass eine wirksame elektrische, bzw. elektromagnetische Entkopplung zwischen den entsprechenden elektrischen Leitungen sichergestellt wird. Der Anwendungsbereich des elastischen Dämpfungs- und Befestigungselements 100 ist hierbei nicht begrenzt und umfasst hierbei insbesondere den Hoch- und Tiefbau, den Maschinenbau und/oder den Gebäudebau.

Das elastische Dämpfungs- und Befestigungselement 100 gemäß der in Fig. 1 dargestellten ersten Ausführungsform umfasst einen elastischen Hülsenring 101 zum Umschließen der in Fig. 1 nicht dargestellten Leitung. Der elastische Hülsenring 101 ist hierbei insbesondere als ein ringförmig ausgebildeter elastischer Hülsenring 101 geformt. Der elastische Hülsenring 101 weist eine der Leitung zugewandte Innenwandung 103 auf, welche einen Hülsenringinnenraum 104 zum Aufnehmen der Leitung umschließt.

In der Innenwandung 103 ist eine Mehrzahl von sich radial erstreckenden Ausnehmungen 105 geformt. Zwischen zwei nebeneinander in der Innenwandung 103 geformten Ausnehmungen 105 ist jeweils ein sich in Richtung des Hülsenringinnenraums 104 erstreckender Vorsprung 107, insbesondere spitz zulaufender Vorsprung 107 geformt.

Die Vorsprünge 107 liegen umlaufend an der in dem Hülsenringinnenraum 104 aufgenommenen und in Fig. 1 nicht dargestellten Leitung an und dienen zum Abfangen von Stößen und Schwingungen der von dem elastischen Hülsenring 101 umschlossenen Leitung.

Auch wenn dies in der Fig. 1 nicht dargestellt ist, können die Ausnehmungen 105 und Vorsprünge 107 in einer alternativen Ausführungsform nicht vorhanden sein, wobei in diesem Fall die Innenwandung 103 des elastischen Hülsenrings 101 direkt an der in Fig. 1 nicht dargestellten Leitung anliegt.

Der elastische Hülsenring 101, und insbesondere auch die Vorsprünge 107 sind aus zumindest einem Elastomer, und/oder zumindest einem thermoplastischen Elastomer (TPE) geformt.

Der elastische Hülsenring 101, und insbesondere auch die Vorsprünge 107 umfassen hierbei insbesondere einen Elastomer-Kunststoff insbesondere Ethylen-Propylen-Dien-Kautschuk (EPDM), Nitrilkautschuk (NBR), Silikon, und/oder thermoplastisches Elastomer (TPE). Der Elastomer-Kunststoff weist insbesondere eine Shore-Härte zwischen 30 und 80 ShoreA, insbesondere zwischen 50 und 70 ShoreA auf, wodurch eine besonders wirksame elastische Verformbarkeit des elastischen Hülsenrings 101, insbesondere der Vorsprünge 107, gewährleistet werden kann. Die Shore-Härte wird hierbei nach der Norm DIN ISO 7619-1 bestimmt.

Aus der Fig. 1 geht hervor, dass der elastische Hülsenring 101 einen Verschlussabschnitt 109 zum Schließen des elastischen Hülsenrings 101 um die Leitung aufweist, wobei der Verschlussabschnitt 109 hierbei zwei Bereiche aufweist, einen Einführbereich 111 an dem ein Widerhaken 113 gebildet ist, und einen Aufnahmebereich 115 in dem eine Aufnahmeöffnung 117 zur Aufnahme des Widerhakens 113 gebildet ist.

Dadurch entsteht ein integraler und einstückiger Verschlussabschnitt 109 in dem elastischen Hülsenring 101, der es erlaubt, dass das elastische Dämpfungs- und Befestigungselement 100 an beliebigen Stellen auf die Leitung aufgesetzt und verschlossen werden kann. Beim Schließen des elastischen Dämpfungs- und Befestigungselements 100 wird der Widerhaken 113 in die Aufnahmeöffnung 117 gedrückt. Dadurch werden die Vorsprünge 107 an die Leitung angelegt. In diesem Fall wird das elastische Dämpfungs- und Befestigungselement 100 nicht entlang der Leitung verschoben, sondern an einer vorgesehenen Stelle angelegt.

Der Verschlussabschnitt 109 kann einen Thermoplast-Kunststoff, einen Elastomer-Kunststoff und/oder einen thermoplastischen Elastomer-Kunststoff (TPE) umfassen, und ist insbesondere als ein EPDM, NBR, Silikon, TPE, PP, PA und/oder PVC ausgewählt. Der Kunststoff weist insbesondere eine Shore-Härte zwischen 70 und 100, insbesondere zwischen 85 und 95 auf, wodurch eine besonders stabile Anordnung des Verschlussabschnitts 109 gewährleistet werden kann. Die Shore-Härte wird hierbei nach der Norm DIN ISO 7619-1 bestimmt.

Wie aus der Fig. 1 hervorgeht, weist das elastische Dämpfungs- und Befestigungselement 100 ferner einen ersten Befestigungsvorsprung 119 und einen zweiten Befestigungsvorsprung 121 auf, welche einstückig in dem elastischen Hülsenring 101 geformt sind.

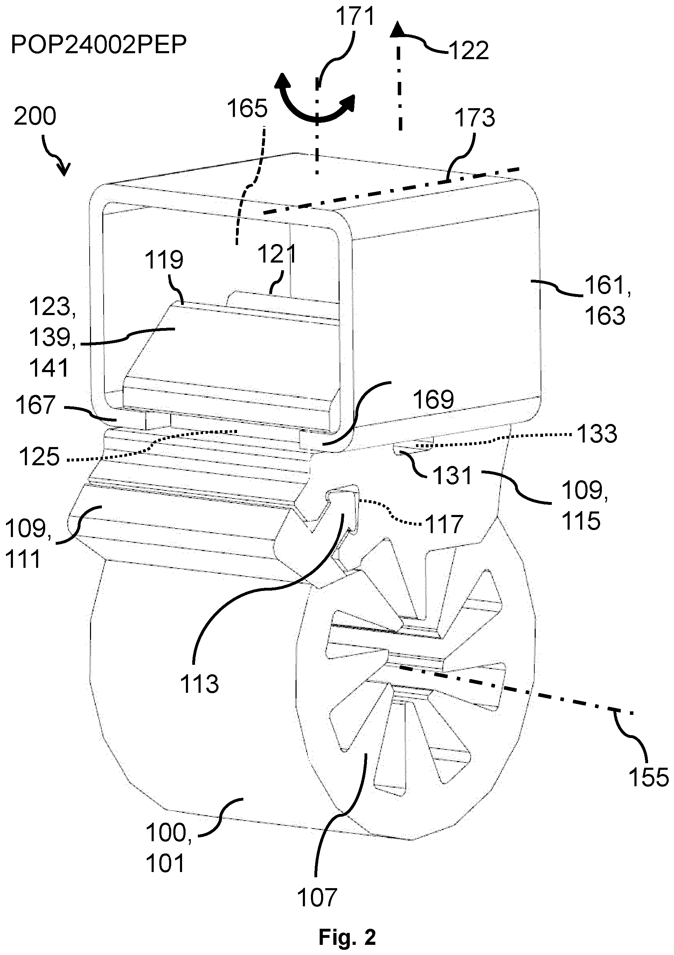

Der erste und zweite Befestigungsvorsprung 119, 121 dienen zur Befestigung des elastischen Dämpfungs- und Befestigungselements 100 an einer in Fig. 1 nicht dargestellten Befestigungsschiene. Für das entsprechende Befestigungssystem 200 umfassend das elastische Dämpfungs- und Befestigungselement 100 und die Befestigungsschiene wird auf die nachfolgende Fig. 2 verwiesen.

Der erste Befestigungsvorsprung 119 weist einen ersten Einführschrägenbereich 123 auf, welcher ausgebildet ist beim Einführen des ersten Befestigungsvorsprungs 119 in einen Schieneninnenraum der in Fig. 1 nicht dargestellten Befestigungsschiene an einem ersten Schienenvorsprung der Befestigungsschiene entlangzugleiten. Der erste Befestigungsvorsprung 119 weist eine dem ersten Einführschrägenbereich 123 in Einführrichtung 122 nachgelagerte erste Hinterschneidung 125 auf, welche ausgebildet ist, zumindest einen Schienenvorsprung der Befestigungsschiene aufzunehmen, um die Befestigungsschiene an dem elastischen Dämpfungs- und Befestigungselement 100 zu befestigen.

Analog weist der zweite Befestigungsvorsprung 121 einen zweiten Einführschrägenbereich 127 auf, welcher ausgebildet ist beim Einführen des zweiten Befestigungsvorsprungs 121 in einen Schieneninnenraum der Befestigungsschiene an einem zweiten Schienenvorsprung der Befestigungsschiene entlangzugleiten, und wobei der zweite Befestigungsvorsprung 121 eine dem zweiten Einführschrägenbereich 127 in Einführrichtung 122 nachgelagerte zweite Hinterschneidung 129 aufweist, welche ausgebildet ist, zumindest einen Schienenvorsprung der Befestigungsschiene aufzunehmen, um die Befestigungsschiene an dem elastischen Dämpfungs- und Befestigungselement 100 zu befestigen.

Aus der Fig. 1 ist zu entnehmen, dass der erste und zweite Befestigungsvorsprung 119, 121 jeweils an einer dem Hülsenringinnenraum 104 abgewandten Aufnahmebereichsaußenseite 131 des Aufnahmebereichs 115 des Verschlussabschnitts 109 angeordnet sind.

Der erste und zweite Befestigungsvorsprung 119, 121 sind ferner insbesondere durch einen zwischen dem ersten und zweiten Befestigungsvorsprung 119, 121 verlaufenden Befestigungsvorsprungsspalt 133 voneinander beabstandet, was beim Einführen des ersten und zweiten Befestigungsvorsprung 119, 121 in den Schieneninnenraum der in Fig. 1 nicht dargestellten Befestigungsschiene ermöglicht, dass der erste und zweite Befestigungsvorsprung 119, 121 aufeinander zu einfedern können.

Die erste Hinterschneidung 125 ist insbesondere zwischen dem ersten Einführschrägenbereich 123 und der Aufnahmebereichsaußenseite 131 des Aufnahmebereichs 115 des Verschlussabschnitts 109 angeordnet. Die zweite Hinterschneidung 129 ist insbesondere zwischen dem zweiten Einführschrägenbereich 127 und der Aufnahmebereichsaußenseite 131 des Aufnahmebereichs 115 des Verschlussabschnitts 109 angeordnet.

Wie aus der Fig. 1 ferner hervorgeht, ist die erste Hinterschneidung 125 als eine den ersten Befestigungsvorsprung 119 abschnittsweise umlaufende erste Hinterschneidung 125 geformt, wobei die erste Hinterschneidung 125 insbesondere nicht an einer dem zweiten Befestigungsvorsprung 121 zugewandten ersten Befestigungsvorsprungsinnenseite 135 des ersten Befestigungsvorsprungs 119 geformt ist. Zudem ist die zweite Hinterschneidung 129 als eine den zweiten Befestigungsvorsprung 121 abschnittsweise umlaufende zweite Hinterschneidung 129 geformt, wobei die zweite Hinterschneidung 129 insbesondere nicht an einer dem ersten Befestigungsvorsprung 119 zugewandten zweiten Befestigungsvorsprungsinnenseite 137 des zweiten Befestigungsvorsprungs 121 geformt ist.

Der erste Einführschrägenbereich 123 des ersten Befestigungsvorsprungs 119 weist eine der ersten Befestigungsvorsprungsinnenseite 135 abgewandte erste Befestigungsvorsprungsaußenseite 139 auf, in welcher eine erste Einführschräge 141 gebildet ist, wobei die erste Einführschräge 141 ausgebildet ist beim Einführen des ersten Befestigungsvorsprungs 119 in den Schieneninnenraum der Befestigungsschiene den ersten Schienenvorsprung der Befestigungsschiene zu kontaktieren.

Der zweite Einführschrägenbereich 127 des zweiten Befestigungsvorsprungs 121 weist eine der zweiten Befestigungsvorsprungsinnenseite 137 abgewandte zweite Befestigungsvorsprungsaußenseite 143 auf, in welcher eine zweite Einführschräge 145 gebildet ist, wobei die zweite Einführschräge 145 ausgebildet ist beim Einführen des zweiten Befestigungsvorsprungs 121 in den Schieneninnenraum der Befestigungsschiene den zweite Schienenvorsprung der Befestigungsschiene zu kontaktieren.

Ferner wird noch auf die erste Befestigungsvorsprungsvorderseite 147 und auf die der ersten Befestigungsvorsprungsvorderseite 147 abgewandte erste Befestigungsvorsprungsrückseite 149 verwiesen, welche beide die erste Befestigungsvorsprungsaußenseite 139 mit der ersten Befestigungsvorsprungsinnenseite 135 verbinden.

Die erste Hinterschneidung 125 erstreckt sich auch entlang der ersten Befestigungsvorsprungsvorderseite 147 und entlang der ersten Befestigungsvorsprungsrückseite 149.

Ferner wird noch auf die zweite Befestigungsvorsprungsvorderseite 151 und auf die der zweiten Befestigungsvorsprungsvorderseite 151 abgewandte zweite Befestigungsvorsprungsrückseite 153 verwiesen, welche beide die zweite Befestigungsvorsprungsaußenseite 143 mit der zweiten Befestigungsvorsprungsinnenseite 137 verbinden.

Die zweite Hinterschneidung 129 erstreckt sich auch entlang der zweiten Befestigungsvorsprungsvorderseite 151 und entlang der zweiten Befestigungsvorsprungsrückseite 153.

Aus der Fig. 1 geht ferner hervor, dass sich der elastische Hülsenring 101 in der Tiefe, bzw. ebenfalls die Vorsprünge 107 des elastischen Hülsenrings 101 entlang einer Ringlängsachse 155 erstrecken, welche sich parallel zu einer Leitungslängsrichtung der durch den elastischen Hülsenring 101 umschließbaren und in Fig. 1 nicht dargestellten Leitung erstreckt.

Die erste Einführschräge 141 der ersten Befestigungsvorsprungsaußenseite 139 des ersten Einführschrägenbereichs 123 erstreckt sich hierbei in der Tiefe insbesondere entlang einer ersten Schrägenlängsachse 157. Die zweite Einführschräge 145 der zweiten Befestigungsvorsprungsaußenseite 143 des zweiten Einführschrägenbereichs 127 erstreckt sich in der Tiefe insbesondere entlang einer zweiten Schrägenlängsachse 159, wie in der Fig. 1 dargestellt ist. Wie aus der Fig. 1 ersichtlich ist, definiert die erste Schrägenlängsachse 157 eine Längsachserstreckungsrichtung der ersten Einführschräge 141 entlang der Tiefe des elastischen Dämpfungs- und Befestigungselements 100. Wie aus der Fig. 1 ersichtlich ist, definiert die zweite Schrägenlängsachse 159 eine Längsachserstreckungsrichtung der zweiten Einführschräge 145 entlang der Tiefe des elastischen Dämpfungs- und Befestigungselements 100.

Wie aus der Fig. 1 hervorgeht, erstrecken sich die erste und zweite Schrägenlängsachsen 157, 159 parallel zu der Ringlängsachse 155.

Der erste und zweite Befestigungsvorsprung 119, 121 können aus denen bereits für den elastischen Hülsenring 101 und den Verschlussabschnitt 109 genannten Kunststoffen bestehen, wobei der erste und zweite Befestigungsvorsprung 119, 121 insbesondere eine gemäß der Norm DIN ISO 7619-1 bestimmte Shore-Härte zwischen 70 und 100 ShoreA, insbesondere zwischen 85 und 95 ShoreA aufweist.

Fig. 2 zeigt eine Seitenansicht eines Befestigungssystems umfassend das in Fig. 1 dargestellte elastische Dämpfungs- und Befestigungselement, welches an einer Befestigungsschiene befestigt ist.

Für die Detailbeschreibung des elastischen Dämpfungs- und Befestigungselements 100 wird auf die Ausführungen zur Fig. 1 verwiesen.

In der Fig. 2 ist die Befestigungsschiene 161 gezeigt, welche sich offensichtlich aus der Zeichenebene erstreckt und daher in der Fig. 2 nur in einer Schnittdarstellung gezeigt ist. Die Befestigungsschiene 161 kann beispielsweise mit einer in Fig. 2 nicht dargestellten Wandhalterung eines Gebäudes verbunden sein.

Die Befestigungsschiene 161 weist eine Schienenwandung 163 auf, welche einen Schieneninnenraum 165 der Befestigungsschiene 161 begrenzt. Die Schienenwandung 163 weist einen sich in den Schieneninnenraum 165 erstreckenden ersten Schienenvorsprung 167 auf, Die Schienenwandung 163 weist einen sich in den Schieneninnenraum 165 erstreckenden zweiten Schienenvorsprung 169 auf. Der erste Schienenvorsprung 167 und der zweite Schienenvorsprung 169 sind einander gegenüberliegend in der Befestigungsschiene 161 geformt.

Die Befestigungsschiene 161 besteht insbesondere aus einem nicht verformbaren Material, insbesondere Metall oder Kunststoff.

Aus der Fig. 2 kann klar entnommen werden, dass die erste Hinterschneidung 125 des ersten Befestigungsvorsprungs 119 sowohl den ersten Schienenvorsprung 167 als auch den zweiten Schienenvorsprung 169 der Befestigungsschiene 161 auf gegenüberliegenden Seiten der ersten Hinterschneidung 125 aufnimmt. Anders ausgedrückt greifen sowohl der erste Schienenvorsprung 167 als auch der zweite Schienenvorsprung 169 der Befestigungsschiene 161 von gegenüberliegenden Seiten in die erste Hinterschneidung 125 ein.

Auch wenn dies durch die Befestigungsschiene 161 in der Fig. 2 zum Teil verdeckt ist, nimmt auch die zweite Hinterschneidung 129 des zweiten Befestigungsvorsprungs 121 sowohl den ersten Schienenvorsprung 167 als auch den zweiten Schienenvorsprung 169 der Befestigungsschiene 161 auf gegenüberliegenden Seiten der zweiten Hinterschneidung 129 auf. Anders ausgedrückt greifen sowohl der erste Schienenvorsprung 167 als auch der zweite Schienenvorsprung 169 der Befestigungsschiene 161 von gegenüberliegenden Seiten in die zweite Hinterschneidung 129 ein.

Somit wird eine wirksame Befestigung des elastischen Dämpfungs- und Befestigungselements 100, samt aufgenommener Leitung an der Befestigungsschiene 161 erreicht.

Es wird hierbei nochmals auf die Fig. 1 verwiesen, woraus klar hervorgeht, dass sowohl die erste Hinterschneidung 125 als auch die zweite Hinterschneidung 129 den jeweiligen ersten, bzw. zweiten Befestigungsvorsprung 119, 121 abschnittsweise umlaufen. Insbesondere ist die jeweilige erste, bzw. zweite Hinterschneidung 125, 129 lediglich nicht an der ersten, bzw. zweiten Befestigungsvorsprungsinnenseite 135, 137 angeordnet, und ansonsten an der jeweiligen ersten, bzw. zweiten Befestigungsvorsprungsaußenseite 139, 143, bzw. der jeweiligen ersten, bzw. zweiten Befestigungsvorsprungsvorderseite 147, 151, bzw. der jeweiligen ersten, bzw. zweiten Befestigungsvorsprungsrückseite 149, 153.

Dies bedeutet aufgrund der verformbaren Eigenschaften der Befestigungsvorsprünge 119, 121, dass die Befestigungsvorsprünge 119, 121 innerhalb der Befestigungsschiene 161 gedreht werden können. Eine entsprechende Rotation umfasst insbesondere eine Rotation um 90° um eine Fig. 2 lediglich schematisch dargestellte Elementhochachse 171, welche sich als Normale zu der Aufnahmebereichsaußenseite 131 des Aufnahmebereichs 115 erstreckt.

Nach einer entsprechenden in Fig. 2 lediglich angedeuteten Rotation um die Elementhochachse 171 ändert sich der Kontakt zwischen dem ersten, bzw. zweiten Befestigungsvorsprung 119, 121 und dem entsprechenden ersten Schienenvorsprung 167, bzw. dem zweiten Schienenvorsprung 169 der Befestigungsschiene 161.

Nach einer entsprechenden in Fig. 2 lediglich angedeuteten Rotation greift bei einer Rotation um 90° gegen den Uhrzeigersinn anschließend ausschließlich der zweite Schienenvorsprung 169 in die erste Hinterschneidung 125 ein und greift anschließend der erste Schienenvorsprung 167 in die zweite Hinterschneidung 129 ein.

Nach einer entsprechenden in Fig. 2 lediglich angedeuteten Rotation greift bei einer Rotation um 90° mit dem Uhrzeigersinn anschließend ausschließlich der erste Schienenvorsprung 167 in die erste Hinterschneidung 125 ein und greift anschließend der zweite Schienenvorsprung 169 in die zweite Hinterschneidung 129 ein.

Eine entsprechende Rotation der Befestigungsvorsprünge 119, 121 in der Befestigungsschiene 161 ermöglicht eine vorteilhafte Flexibilität in Bezug auf die Erstreckungsrichtung 173 der Befestigungsschiene 161 und der Erstreckungsrichtung der in dem elastischen Dämpfungs- und Befestigungselement 100 aufgenommenen Leitung, welche durch die Ringlängsachse 155 charakterisiert ist. Die Leitung, bzw. die in Fig. 2 gezeigte Ringlängsachse 155 kann sich entweder, wie in Fig. 2 dargestellt ist, orthogonal zur Erstreckungsrichtung 173 der Befestigungsschiene 161 erstrecken. Nach der in Fig. 2 nicht dargestellten Rotation um 90° um die Elementhochachse 171 erstreckt sich die Leitung, bzw. die Ringlängsachse 155, dann parallel zur Erstreckungsrichtung 173 der Befestigungsschiene 161.

Hierbei muss noch angemerkt werden, dass ein Einführen der Befestigungsvorsprünge 119, 121 in die Befestigungsschiene 161 aufgrund der Federfreiheitsgrade der Befestigungsvorsprünge 119, 121 offensichtlich nicht in der in Fig. 2 dargestellten Position möglich ist, sondern bei einer gemäß Fig. 2 nicht dargestellten Rotation der Befestigungsvorsprünge 119, 121 um 90° um die Elementhochachse 171 durchgeführt wird.

Unabhängig von der Rotationsposition der Befestigungsvorsprünge 119, 121 in der Befestigungsschiene 161 ist durch den dauerhaften Eingriff des jeweiligen ersten, bzw. zweiten Schienenvorsprungs 167, 169 in die erste, bzw. zweite Hinterschneidung 125, 129 in jeder Rotationsposition eine Sicherung gegen ein ungewolltes Herausfallen aus der Befestigungsschiene 161 sichergestellt.

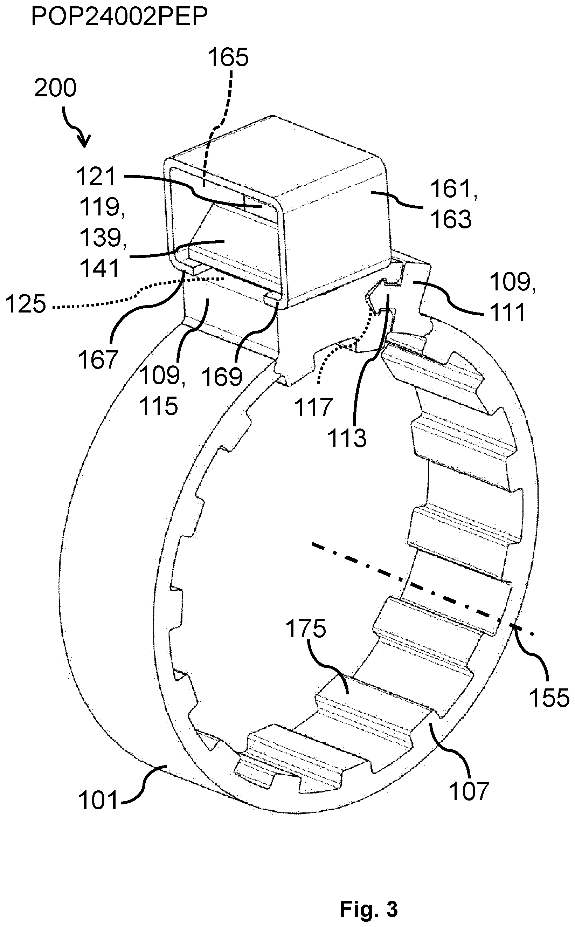

Fig. 3 zeigt eine Seitenansicht eines elastischen Dämpfungs- und Befestigungssystems umfassend ein elastisches Dämpfungs- und Befestigungselement gemäß einer zweiten Ausführungsform, welches an einer Befestigungsschiene befestigt ist.

Für die Detailausgestaltung des elastischen Dämpfungs- und Befestigungselements 100 wird auf die Ausführungen zur Fig. 1 verwiesen. Für die Detailausgestaltung des elastischen Dämpfungs- und Befestigungssystems wird auf die Ausführungen zur Fig. 2 verwiesen.

Das in der Fig. 3 dargestellte elastische Dämpfungs- und Befestigungselement 100 gemäß der zweiten Ausführungsform unterscheidet sich von dem in der Fig. 1 und Fig. 2 dargestellten elastischen Dämpfungs- und Befestigungselement 100 gemäß der ersten Ausführungsform lediglich durch die vertauschte Orientierung des Einführbereichs 111 und des Aufnahmebereichs 115 des Verschlussabschnitts 109, und lediglich dadurch, dass die Vorsprünge 107 nicht spitz zulaufend ausgebildet sind, sondern, dass die Vorsprünge 107 jeweils eine an die Leitung anlegbare flächig ausgebildete Vorsprungoberseite 175 aufweisen. Dadurch eignet sich das in der Fig. 3 dargestellte elastische Dämpfungs- und Befestigungselement 100 gemäß der zweiten Ausführungsform für die Aufnahme von Leitungen mit einem größeren Leitungsdurchmesser, insbesondere mit einem Leitungsdurchmesser zwischen 20 und 100 mm.

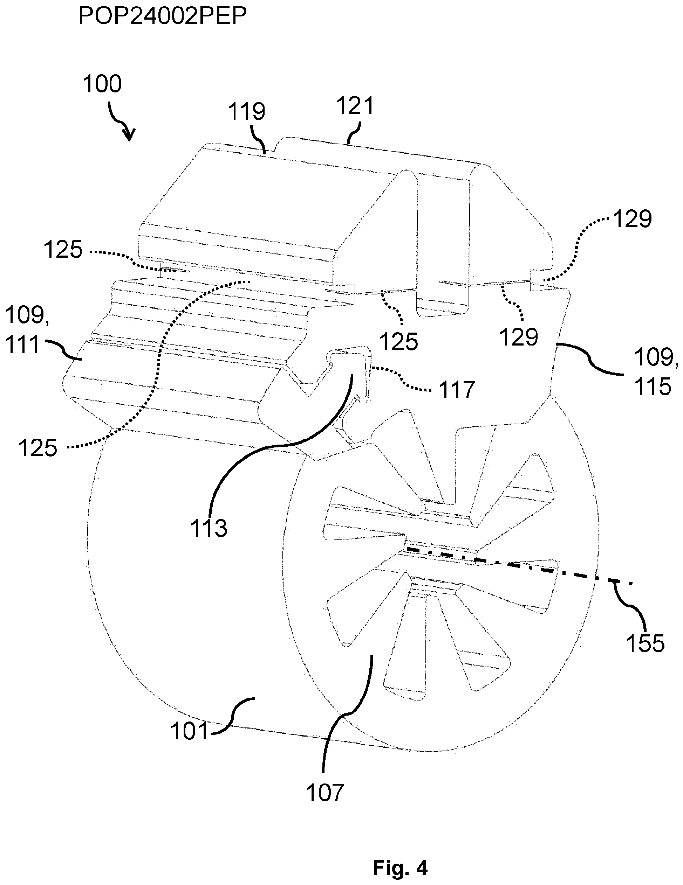

Fig. 4 zeigt eine Seitenansicht eines elastischen Dämpfungs- und Befestigungselements gemäß einer dritten Ausführungsform.

Für die Detailausgestaltung des elastischen Dämpfungs- und Befestigungselements 100 wird auf die Ausführungen zur Fig. 1 verwiesen.

Das in der Fig. 4 dargestellte elastische Dämpfungs- und Befestigungselement 100 gemäß der dritten Ausführungsform unterscheidet sich von dem in der Fig. 1 dargestellten elastischen Dämpfungs- und Befestigungselement 100 gemäß der ersten Ausführungsform lediglich dadurch, dass die jeweilige erste und zweite Hinterschneidung 125, 129 nicht vollumfänglich als eine Nut ausgebildet ist, sondern dass die jeweilige erste und zweite Hinterschneidung 125, 129 an der jeweiligen ersten, bzw. zweiten Befestigungsvorsprungsvorderseite 147, 151, bzw. ersten, bzw. zweiten Befestigungsvorsprungsrückseite 149, 153, bzw. zum Teil auch an der jeweiligen ersten, bzw. zweiten Befestigungsvorsprungsaußenseite 139, 1431 als ein jeweiliger Schlitz ausgebildet ist, was eine besondere wirksame Festlegung des jeweiligen Schienenvorsprungs 167, 169 innerhalb der Befestigungsschiene 161 ermöglicht.

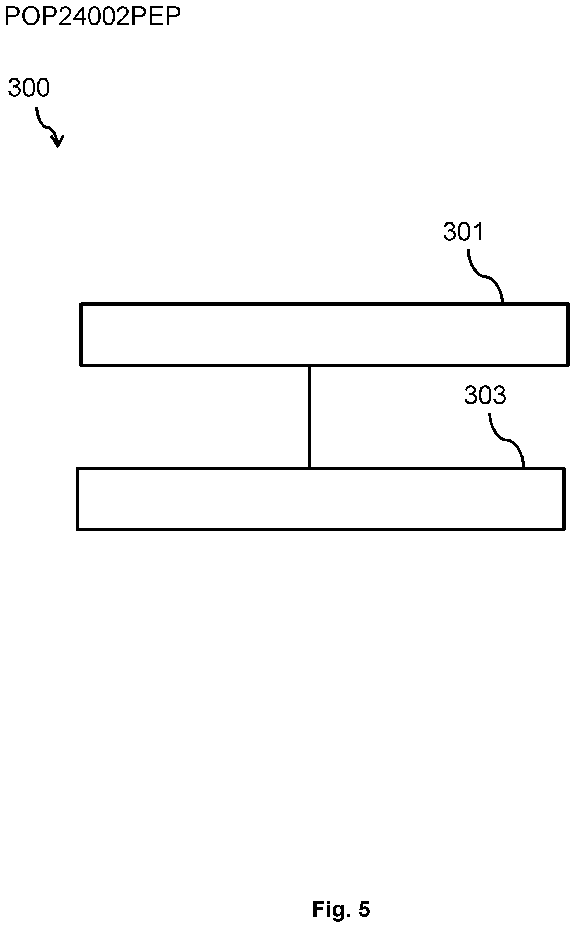

Fig. 5 zeigt ein Verfahren zum Herstellen eines elastischen Dämpfungs- und Befestigungselements.

Das Verfahren 300 umfasst als ersten Verfahrensschritt das Bereitstellen 301 zumindest eines Kunststoffs.

Das Verfahren 300 umfasst als zweiten Verfahrensschritt das einstückige Formen 303 des elastischen Dämpfungs- und Befestigungselements 100 in einem Formwerkzeug aus dem bereitgestellten zumindest einen Kunststoff.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Elastisches Dämpfungs- und Befestigungselement
- 101: Elastischer Hülsenring
- 103: Innenwandung
- 104: Hülsenringinnenraum
- 105: Ausnehmung
- 107: Vorsprung
- 109: Verschlussabschnitt
- 111: Einführbereich
- 113: Widerhaken
- 115: Aufnahmebereich
- 117: Aufnahmeöffnung
- 119: Erster Befestigungsvorsprung
- 121: Zweiter Befestigungsvorsprung
- 122: Einführrichtung
- 123: Ersten Einführschrägenbereich
- 125: Erste Hinterschneidung
- 127: Zweiter Einführschrägenbereich
- 129: Zweite Hinterschneidung
- 131: Aufnahmebereichsaußenseite des Aufnahmebereichs
- 133: Befestigungsvorsprungsspalt
- 135: Erste Befestigungsvorsprungsinnenseite
- 137: Zweite Befestigungsvorsprungsinnenseite
- 139: Erste Befestigungsvorsprungsaußenseite
- 141: Erste Einführschräge
- 143: Zweite Befestigungsvorsprungsaußenseite
- 145: Zweite Einführschräge
- 147: Erste Befestigungsvorsprungsvorderseite
- 149: Erste Befestigungsvorsprungsrückseite
- 151: Zweite Befestigungsvorsprungsvorderseite
- 153: Zweite Befestigungsvorsprungsrückseite
- 155: Ringlängsachse
- 157: Erste Schrägenlängsachse
- 159: Zweiter Schrägenlängsachse
- 161: Befestigungsschiene
- 163: Schienenwandung
- 165: Schieneninnenraum
- 167: Erste Schienenvorsprung
- 169: Zweiter Schienenvorsprung
- 171: Elementhochachse
- 173: Erstreckungsrichtung der Befestigungsschiene
- 175: Vorsprungoberseite des Vorsprungs
- 200: Elastisches Dämpfungs- und Befestigungssystem
- 300: Verfahren zum Herstellen eines elastisches Dämpfungs- und Befestigungssystems
- 301: Erster Verfahrensschritt: Bereitstellen zumindest eines Kunststoffs
- 303: Zweiter Verfahrensschritt: Einstückige Formen des elastischen Dämpfungs- und Befestigungselements

## Patentansprüche

1. Elastisches Dämpfungs- und Befestigungselement (100) zum Dämpfen von Vibrationen einer Leitung und zur Befestigung an einer Befestigungsschiene (161), mit:
einem elastischen Hülsenring (101) zum Umschließen der Leitung, wobei der elastische Hülsenring (101) eine der Leitung zugewandte Innenwandung (103) aufweist, welche einen Hülsenringinnenraum (104) zum Aufnehmen der Leitung umschließt, wobei die Innenwandung (103) ausgebildet ist, an der in dem Hülsenringinnenraum (104) aufnehmbaren Leitung anzuliegen, um Vibrationen der Leitung zu dämpfen; und
einem ersten Befestigungsvorsprung (119) und einem zweiten Befestigungsvorsprung (121), welche einstückig mit dem elastischen Hülsenring (101) geformt sind,
wobei der erste Befestigungsvorsprung (119) einen ersten Einführschrägenbereich (123) aufweist, welcher ausgebildet ist beim Einführen des ersten Befestigungsvorsprungs (119) in einen Schieneninnenraum (165) der Befestigungsschiene (161) an einem ersten Schienenvorsprung (167) der Befestigungsschiene (161) entlang zu gleiten, und wobei der erste Befestigungsvorsprung (119) eine dem ersten Einführschrägenbereich (123) in Einführrichtung (122) nachgelagerte erste Hinterschneidung (125) aufweist, welche ausgebildet ist, zumindest einen Schienenvorsprung (167, 169) der Befestigungsschiene (161) aufzunehmen, um die Befestigungsschiene (161) an dem elastisches Dämpfungs- und Befestigungselement (100) zu befestigen,
wobei der zweite Befestigungsvorsprung (121) einen zweiten Einführschrägenbereich (127) aufweist, welcher ausgebildet ist beim Einführen des zweiten Befestigungsvorsprungs (121) in einen Schieneninnenraum (165) der Befestigungsschiene (161) an einem zweiten Schienenvorsprung (169) der Befestigungsschiene (161) entlang zu gleiten, und wobei der zweite Befestigungsvorsprung (121) eine dem zweiten Einführschrägenbereich (127) in Einführrichtung (122) nachgelagerte zweite Hinterschneidung (129) aufweist, welche ausgebildet ist, zumindest einen Schienenvorsprung (167, 169) der Befestigungsschiene (161) aufzunehmen, um die Befestigungsschiene (161) an dem elastisches Dämpfungs- und Befestigungselement (100) zu befestigen, **dadurch gekennzeichnet, dass**
die erste Hinterschneidung (125) als eine den ersten Befestigungsvorsprung (119) zumindest abschnittsweise umlaufende erste Hinterschneidung (125) geformt ist, und die zweite Hinterschneidung (129) als eine den zweiten Befestigungsvorsprung (121) zumindest abschnittsweise umlaufende zweite Hinterschneidung (129) geformt ist.

2. Elastisches Dämpfungs- und Befestigungselement (100) nach Anspruch 1, wobei der elastische Hülsenring (101) einen Verschlussabschnitt (109) zum Schließen des elastischen Hülsenrings (101) um die Leitung aufweist, wobei insbesondere an einem Einführbereich (111) des Verschlussabschnitts (109) ein Widerhaken (113) gebildet ist, und wobei insbesondere an einem Aufnahmebereich (115) des Verschlussabschnitts (109) eine Aufnahmeöffnung (117) zum Aufnehmen des Widerhakens (113) gebildet ist.

3. Elastisches Dämpfungs- und Befestigungselement (100) nach Anspruch 2, wobei der erste und zweite Befestigungsvorsprung (119, 121) jeweils an einer dem Hülsenringinnenraum (104) angewandten Aufnahmebereichsaußenseite (131) des Aufnahmebereichs (115) des Verschlussabschnitts (109) angeordnet sind, und/oder wobei der erste und zweite Befestigungsvorsprung (119, 121) durch einen zwischen dem ersten und zweiten Befestigungsvorsprung (119, 121) verlaufenden Befestigungsvorsprungsspalt (133) voneinander beabstandet sind.

4. Elastisches Dämpfungs- und Befestigungselement (100) nach Anspruch 2 oder 3, wobei die erste Hinterschneidung (125) zwischen dem ersten Einführschrägenbereich (123) und dem Aufnahmebereich (115) des Verschlussabschnitts (109), insbesondere der Aufnahmebereichsaußenseite (131) des Aufnahmebereichs (115) des Verschlussabschnitts (109) angeordnet ist, und wobei die zweite Hinterschneidung (129) zwischen dem zweiten Einführschrägenbereich (127) und dem Aufnahmebereich (115) des Verschlussabschnitts (109), insbesondere der Aufnahmebereichsaußenseite (131) des Aufnahmebereichs (115) des Verschlussabschnitts (109) angeordnet ist.

5. Elastisches Dämpfungs- und Befestigungselement (100) nach einem der vorangehenden Ansprüche, wobei die erste Hinterschneidung (125) nicht an einer dem zweiten Befestigungsvorsprung (121) zugewandten ersten Befestigungsvorsprungsinnenseite (135) des ersten Befestigungsvorsprungs (119) geformt ist, und
wobei die zweite Hinterschneidung (129) nicht an einer dem ersten Befestigungsvorsprung (119) zugewandten zweiten Befestigungsvorsprungsinnenseite (137) des zweiten Befestigungsvorsprungs (121) geformt ist.

6. Elastisches Dämpfungs- und Befestigungselement (100) nach einem der vorangehenden Ansprüche, wobei der erste Einführschrägenbereich (123) des ersten Befestigungsvorsprungs (119) eine erste Befestigungsvorsprungsinnenseite (135) aufweist, welche dem zweiten Befestigungsvorsprung (121) zugewandt ist, wobei der erste Einführschrägenbereich (123) einer der ersten Befestigungsvorsprungsinnenseite (135) abgewandte erste Befestigungsvorsprungsaußenseite (139) aufweist, in welcher eine erste Einführschräge (141) gebildet ist, wobei die erste Einführschräge (141) ausgebildet ist beim Einführen des ersten Befestigungsvorsprungs (119) in den Schieneninnenraum (165) der Befestigungsschiene (161) den ersten Schienenvorsprung (167) der Befestigungsschiene (161) zu kontaktieren, und
wobei der zweite Einführschrägenbereich (127) des zweiten Befestigungsvorsprungs (121) eine zweite Befestigungsvorsprungsinnenseite (137) aufweist, welche dem ersten Befestigungsvorsprung (119) zugewandt ist, wobei der zweite Einführschrägenbereich (127) einer der zweiten Befestigungsvorsprungsinnenseite (137) abgewandte zweite Befestigungsvorsprungsaußenseite (143) aufweist, in welcher eine zweite Einführschräge (145) gebildet ist, wobei die zweite Einführschräge (145) ausgebildet ist beim Einführen des zweite Befestigungsvorsprungs (121) in den Schieneninnenraum (165) der Befestigungsschiene (161) den zweiten Schienenvorsprung (169) der Befestigungsschiene (161) zu kontaktieren.

7. Elastisches Dämpfungs- und Befestigungselement (100) nach einem der vorangehenden Ansprüche, wobei sich der elastische Hülsenring (101), insbesondere die Vorsprünge (107) des elastischen Hülsenrings (101), in der Tiefe entlang einer Ringlängsachse (155) erstrecken, welche sich parallel zu einer Leitungslängsrichtung der durch den elastischen Hülsenring (101) umschließbaren Leitung erstreckt, wobei sich der erste Einführschrägenbereich (123), insbesondere die erste Einführschräge (141) der ersten Befestigungsvorsprungsaußenseite (139) des ersten Einführschrägenbereichs (123), in der Tiefe entlang einer ersten Schrägenlängsachse (157) erstreckt, wobei sich der zweite Einführschrägenbereich (127), insbesondere die zweite Einführschräge (145) der zweiten Befestigungsvorsprungsaußenseite (143) des zweiten Einführschrägenbereichs (127), in der Tiefe entlang einer zweiten Schrägenlängsachse (159) erstreckt,
wobei sich die erste und zweite Schrägenlängsachse (157, 159) parallel zu der Ringlängsachse (155) erstreckt, oder wobei sich die erste und zweite Schrägenlängsachse (157, 159) winklig, insbesondere rechtwinklig, zu der Ringlängsachse (155) erstreckt.

8. Elastisches Dämpfungs- und Befestigungselement (100) nach einem der vorangehenden Ansprüche, wobei in der Innenwandung (103) eine Mehrzahl von sich radial erstreckenden Ausnehmungen (105) geformt ist, wobei zwischen zwei nebeneinander in der Innenwandung (103) geformten Ausnehmungen (105) jeweils ein sich in Richtung des Hülsenringinnenraums (104) erstreckender Vorsprung (107) geformt ist, wobei die Vorsprünge (107) ausgebildet sind, an der in dem Hülsenringinnenraum (104) aufnehmbaren Leitung anzuliegen, um Vibrationen der Leitung zu dämpfen.

9. Elastisches Dämpfungs- und Befestigungselement (100) nach einem der vorangehenden Ansprüche, wobei das elastische Dämpfungs- und Befestigungselement (100) aus zumindest einem Thermoplast, zumindest einem Elastomer, und/oder zumindest einem thermoplastischen Elastomer (TPE) geformt ist.

10. Elastisches Dämpfungs- und Befestigungselement (100) nach einem der vorangehenden Ansprüche, wobei der elastische Hülsenring (101) eine gemäß der Norm DIN ISO 7619-1 bestimmte Shore-Härte zwischen 30 und 80 ShoreA, insbesondere zwischen 50 und 70 ShoreA aufweist, und wobei der erste und zweite Befestigungsvorsprung (119, 121) eine gemäß der Norm DIN ISO 7619-1 bestimmte Shore-Härte zwischen 70 und 100 ShoreA, insbesondere zwischen 85 und 95 ShoreA aufweist.

11. Elastisches Dämpfungs- und Befestigungssystem (200) mit einem elastischen Dämpfungs- und Befestigungselement (100) nach einem der vorangehenden Ansprüche und eine Befestigungsschiene (161), welche einen durch eine Schienenwandung (163) der Befestigungsschiene (161) begrenzten Schieneninnenraum (165) aufweist, wobei die Schienenwandung (163) einen sich in den Schieneninnenraum (165) erstreckenden ersten Schienenvorsprung (167) aufweist, und wobei die Schienenwandung (163) einen sich in den Schieneninnenraum (165) erstreckenden zweiten Schienenvorsprung (169) aufweist, wobei der erste Schienenvorsprung (167) und der zweite Schienenvorsprung (169) einander gegenüberliegend in der Befestigungsschiene (161) geformt sind,
wobei der erste Schienenvorsprung (167) ausgebildet ist in die erste Hinterschneidung (125) des ersten Befestigungsvorsprungs (119) und/oder in die zweite Hinterschneidung (129) des zweiten Befestigungsvorsprungs (121) einzugreifen, und wobei der zweite Schienenvorsprung (169) ausgebildet ist in die erste Hinterschneidung (125) des ersten Befestigungsvorsprungs (119) und/oder in die zweite Hinterschneidung (129) des zweiten Befestigungsvorsprungs (121) einzugreifen.

12. Elastisches Dämpfungs- und Befestigungssystem (200) nach Anspruch 11, ferner umfassend einer Leitung, welche in dem durch die Innenwandung (103) des elastischen Hülsenrings (101) umschlossenen Hülsenringinnenraum (104) aufgenommen ist.

13. Verfahren (300) zum Herstellen eines elastischen Dämpfungs- und Befestigungselements (100), umfassend die folgenden Verfahrensschritte:
Bereitstellen (301) zumindest eines Kunststoffs,
Einstückiges Formen (303) des elastischen Dämpfungs- und Befestigungselements (100) in einem Formwerkzeug aus dem bereitgestellten zumindest einen Kunststoff,
wobei das elastische Dämpfungs- und Befestigungselement (100) einen elastischen Hülsenring (101) zum Umschließen einer Leitung aufweist, wobei der elastische Hülsenring (101) eine der Leitung zugewandte Innenwandung (103) aufweist, welche einen Hülsenringinnenraum (104) zum Aufnehmen der Leitung umschließt, wobei die Innenwandung (103) ausgebildet ist, an der in dem Hülsenringinnenraum (104) aufnehmbaren Leitung anzuliegen, um Vibrationen der Leitung zu dämpfen, und
wobei das elastische Dämpfungs- und Befestigungselement (100) einen ersten Befestigungsvorsprung (119) und einen zweiten Befestigungsvorsprung (121) aufweisen, welche einstückig mit dem elastische Hülsenring (101) geformt sind, wobei
erste Befestigungsvorsprung (119) einen ersten Einführschrägenbereich (123) aufweist, welcher ausgebildet ist, beim Einführen des ersten Befestigungsvorsprungs (119) in einen Schieneninnenraum (165) der Befestigungsschiene (161) an einem ersten Schienenvorsprung (167) der Befestigungsschiene (161) entlang zu gleiten, und wobei der erste Befestigungsvorsprung (119) eine dem ersten Einführschrägenbereich (123) in Einführrichtung (122) nachgelagerte erste Hinterschneidung (125) aufweist, welche ausgebildet ist, den ersten Schienenvorsprung (167) der Befestigungsschiene (161) aufzunehmen, um die Befestigungsschiene (161) an dem elastisches Dämpfungs- und Befestigungselement (100) zu befestigen, wobei der zweite Befestigungsvorsprung (121) einen zweiten Einführschrägenbereich (127) aufweist, welcher ausgebildet ist beim Einführen des zweiten Befestigungsvorsprungs (121) in einen Schieneninnenraum (165) der Befestigungsschiene (161) an einem zweiten Schienenvorsprung (169) der Befestigungsschiene (161) entlang zu gleiten, und wobei der zweite Befestigungsvorsprung (121) eine dem zweiten Einführschrägenbereich (127) in Einführrichtung (122) nachgelagerte zweite Hinterschneidung (129) aufweist, welche ausgebildet ist, zumindest einen Schienenvorsprung (167, 169) der Befestigungsschiene (161) aufzunehmen, um die Befestigungsschiene (161) an dem elastisches Dämpfungs- und Befestigungselement (100) zu befestigen, **dadurch gekennzeichnet, dass**
die erste Hinterschneidung (125) als eine den ersten Befestigungsvorsprung (119) zumindest abschnittsweise umlaufende erste Hinterschneidung (125) geformt ist,
und die zweite Hinterschneidung (129) als eine den zweiten Befestigungsvorsprung (121) zumindest abschnittsweise umlaufende zweite Hinterschneidung (129) geformt ist.

14. Verfahren (300) nach Anspruch 13, wobei das einstückige Formen (303) des elastischen Dämpfungs- und Befestigungselements (100) ein einstückiges Extrudieren des elastischen Dämpfungs- und Befestigungselements (100) in einem Extrusionswerkzeug oder das einstückige Spitzgießen des elastischen Dämpfungs- und Befestigungselements (100) in einem Spritzgusswerkzeug umfasst.

15. Verfahren (300) nach Anspruch 13 oder 14, wobei das einstückige Formen (303) des elastischen Dämpfungs- und Befestigungselements (100) in dem Formwerkzeug das Bereitstellen von unterschiedlichen Maschinen- und Prozessparametern, insbesondere das Bereitstellen von unterschiedlichen Temperaturen und das Bereitstellen von unterschiedlichen Volumen, in unterschiedlichen Bereichen des Formwerkzeugs umfasst, so dass in dem hergestellten elastischen Dämpfungs- und Befestigungselements (100) unterschiedliche Bereiche mit unterschiedlichen gemäß der Norm DIN ISO 7619-1 bestimmten Shore-Härten und Materialhärten vorhanden sind.

## Claims

1. Elastic damping and fastening element (100) for damping vibrations of a line and for fastening at a fastening rail (161), the elastic damping and fastening element (100) comprising:
an elastic sleeve ring (101) for enclosing the line, wherein the elastic sleeve ring (101) has an inner wall (103) facing the line, which inner wall (103) encloses a sleeve ring interior (104) for receiving the line, wherein the inner wall (103) is adapted to abut at the line receivable in the sleeve ring interior (104) in order to dampen vibrations of the line; and
a first fastening projection (119) and a second fastening projection (121), which are formed with the elastic sleeve ring (101) in one piece,
wherein the first fastening projection (119) has a first insertion slope section (123), which is adapted to slide along a first rail projection (167) of the fastening rail (161) when the first fastening projection (119) is inserted into a rail interior (165) of the fastening rail (161), and wherein the first fastening projection (119) has a first undercut (125) downstream of the first insertion slope section (123) in the insertion direction (122), which first undercut (125) is adapted to receive at least one rail projection (167, 169) of the fastening rail (161) in order to fasten the fastening rail (161) at the elastic damping and fastening element (100),
wherein the second fastening projection (121) has a second insertion slope section (127), which is adapted to slide along a second rail projection (169) of the fastening rail (161) when the second fastening projection (121) is inserted into a rail interior (165) of the fastening rail (161), and wherein the second fastening projection (121) has a second undercut (129) downstream of the second insertion slope section (127) in the insertion direction (122), which second undercut (129) is adapted to receive at least one rail projection (167, 169) of the fastening rail (161) in order to fasten the fastening rail (161) at the elastic damping and fastening element (100), **characterized in that**
the first undercut (125) is formed as a first undercut (125) at least partially surrounding the first fastening projection (119), and
the second undercut (129) is formed as a second undercut (129) at least partially surrounding the second fastening projection (121).

2. Elastic damping and fastening element (100) according to claim 1, wherein the elastic sleeve ring (101) has a closing section (109) for closing the elastic sleeve ring (101) around the line, wherein in particular a barb (113) is formed at an insertion area (111) of the closing section (109), and wherein in particular a receiving opening (117) for receiving the barb (113) is formed at a receiving area (115) of the closing section (109).

3. Elastic damping and fastening element (100) according to claim 2, wherein the first and second fastening projections (119, 121) are each arranged at a receiving area outer side (131) of the receiving area (115) of the closing section (109), which receiving area outer side (131) faces away from the sleeve ring interior (104), and/or wherein the first and second fastening projections (119, 121) are spaced apart from each other by a fastening projection gap (133) extending between the first and second fastening projections (119, 121).

4. Elastic damping and fastening element (100) according to claim 2 or 3, wherein the first undercut (125) is arranged between the first insertion slope section (123) and the receiving area (115) of the closing section (109), in particular the receiving area outer side (131) of the receiving area (115) of the closing section (109), and wherein the second undercut (129) is arranged between the second insertion slope section (127) and the receiving area (115) of the closing section (109), in particular the receiving area outer side (131) of the receiving area (115) of the closing section (109).

5. Elastic damping and fastening element (100) according to one of the preceding claims, wherein the first undercut (125) is not formed at a first fastening projection inner side (135) of the first fastening projection (119) facing the second fastening projection (121), and
wherein the second undercut (129) is not formed at a second fastening projection inner side (137) of the second fastening projection (121) facing the first fastening projection (119).

6. Elastic damping and fastening element (100) according to one of the preceding claims, wherein the first insertion slope section (123) of the first fastening projection (119) has a first fastening projection inner side (135) facing the second fastening projection (121), wherein the first insertion slope section (123) has a first fastening projection outer side (139) facing away from the first fastening projection inner side (135), in which first fastening projection outer side (139) a first insertion slope (141) is formed, wherein the first insertion slope (141) is adapted to contact the first rail projection (167) of the fastening rail (161) when the first fastening projection (119) is inserted into the rail interior (165) of the fastening rail (161), and
wherein the second insertion slope section (127) of the second fastening projection (121) has a second fastening projection inner side (137) facing the first fastening projection (119), wherein the second insertion slope section (127) has a second fastening projection outer side (143) facing away from the second fastening projection inner side (137), in which second fastening projection outer side (143) a second insertion slope (145) is formed, wherein the second insertion slope (145) is adapted to contact the second rail projection (169) of the fastening rail (161) when the second fastening projection (121) is inserted into the rail interior (165) of the fastening rail (161).

7. Elastic damping and fastening element (100) according to one of the preceding claims, wherein the elastic sleeve ring (101), in particular the projections (107) of the elastic sleeve ring (101), extends in depth along a ring longitudinal axis (155) which extends parallel to a line longitudinal direction of the line enclosable by the elastic sleeve ring (101), wherein the first insertion slope section (123), in particular the first insertion slope (141) of the first fastening projection outer surface (139) of the first insertion slope section (123), extends in depth along a first slope longitudinal axis (157), wherein the second insertion slope section (127), in particular the second insertion slope (145) of the second fastening projection outer side (143) of the second insertion slope section (127), extends in depth along a second slope longitudinal axis (159),
wherein the first and second slope longitudinal axes (157, 159) extend parallel to the ring longitudinal axis (155), or wherein the first and second slope longitudinal axes (157, 159) extend at an angle, in particular at a right angle, to the ring longitudinal axis (155).

8. Elastic damping and fastening element (100) according to one of the preceding claims, wherein a plurality of radially extending recesses (105) are formed in the inner wall (103), wherein a projection (107) extending towards the sleeve ring interior (104) is respectively formed between two recesses (105) formed next to each other in the inner wall (103), wherein the projections (107) are adapted to abut at the line receivable in the sleeve ring interior (104) in order to dampen vibrations of the line.

9. Elastic damping and fastening element (100) according to one of the preceding claims, wherein the elastic damping and fastening element (100) is formed from at least one thermoplastic, at least one elastomer, and/or at least one thermoplastic elastomer (TPE).

10. Elastic damping and fastening element (100) according to one of the preceding claims, wherein the elastic sleeve ring (101) has a Shore hardness between 30 and 80 ShoreA, in particular between 50 and 70 ShoreA, as determined according to the standard DIN ISO 7619-1, and wherein the first and second fastening projections (119, 121) have a Shore hardness between 70 and 100 ShoreA, in particular between 85 and 95 ShoreA, as determined according to the standard DIN ISO 7619-1.

11. Elastic damping and fastening system (200) comprising an elastic damping and fastening element (100) according to one of the preceding claims and a fastening rail (161), which has a rail interior (165) delimited by a rail wall (163) of the fastening rail (161), wherein the rail wall (163) has a first rail projection (167) extending into the rail interior (165), and wherein the rail wall (163) has a second rail projection (169) extending into the rail interior (165), wherein the first rail projection (167) and the second rail projection (169) are formed opposite each other in the fastening rail (161),
wherein the first rail projection (167) is adapted to engage in the first undercut (125) of the first fastening projection (119) and/or in the second undercut (129) of the second fastening projection (121), and wherein the second rail projection (169) is adapted to engage in the first undercut (125) of the first fastening projection (119) and/or in the second undercut (129) of the second fastening projection (121).

12. Elastic damping and fastening system (200) according to claim 11, further comprising a line, which is received in the sleeve ring interior (104) enclosed by the inner wall (103) of the elastic sleeve ring (101).

13. Method (300) for producing an elastic damping and fastening element (100), comprising the following method steps:
providing (301) at least one plastic,
forming (303) the elastic damping and fastening element (100) in one piece in a molding tool from the provided at least one plastic,
wherein the elastic damping and fastening element (100) has an elastic sleeve ring (101) for enclosing a line, wherein the elastic sleeve ring (101) has an inner wall (103) facing the line, which inner wall (103) encloses a sleeve ring interior (104) for receiving the line, wherein the inner wall (103) is adapted to abut at the line receivable in the sleeve ring interior (104) in order to dampen vibrations of the line, and
wherein the elastic damping and fastening element (100) has a first fastening projection (119) and a second fastening projection (121), which are formed with the elastic sleeve ring (101) in one piece, wherein the first fastening projection (119) has a first insertion slope section (123), which is adapted to slide along a first rail projection (167) of the fastening rail (161) when the first fastening projection (119) is inserted into a rail interior (165) of the fastening rail (161), and wherein the first fastening projection (119) has a first undercut (125) downstream of the first insertion slope section (123) in the insertion direction (122), which first undercut (125) is adapted to receive at least one rail projection (167, 169) of the fastening rail (161) in order to fasten the fastening rail (161) at the elastic damping and fastening element (100), wherein the second fastening projection (121) has a second insertion slope section (127), which is adapted to slide along a second rail projection (169) of the fastening rail (161) when the second fastening projection (121) is inserted into a rail interior (165) of the fastening rail (161), and wherein the second fastening projection (121) has a second undercut (129) downstream of the second insertion slope section (127) in the insertion direction (122), which second undercut (129) is adapted to receive at least one rail projection (167, 169) of the fastening rail (161) in order to fasten the fastening rail (161) at the elastic damping and fastening element (100), **characterized in that**
the first undercut (125) is formed as a first undercut (125) at least partially surrounding the first fastening projection (119), and
the second undercut (129) is formed as a second undercut (129) at least partially surrounding the second fastening projection (121).

14. Method (300) according to claim 13, wherein the forming (303) of the elastic damping and fastening element (100) in one piece comprises extruding the elastic damping and fastening element (100) in an extrusion tool in one piece or injection molding the elastic damping and fastening element (100) in an injection mold in one piece.

15. Method (300) according to claim 13 or 14, wherein the forming (303) of the elastic damping and fastening element (100) in one piece in the molding tool comprises providing different machine and process parameters, in particular providing different temperatures and providing different volumes, in different areas of the molding tool, so that different areas with different Shore hardnesses and material hardnesses determined according to the standard DIN ISO 7619-1 are present in the produced elastic damping and fastening element (100).

## Revendications

1. Élément élastique d'amortissement et de fixation (100) destiné à amortir les vibrations d'une ligne et à être fixé sur un rail de fixation (161), cet élément élastique d'amortissement et de fixation (100) comprenant :
un manchon élastique (101) destiné à envelopper le câble, ledit manchon élastique (101) présentant une paroi intérieure (103) faisant face au câble, laquelle paroi intérieure (103) renferme un intérieur de manchon (104) destiné à recevoir le câble, la paroi intérieure (103) étant conçue pour venir buter contre le câble destiné à être reçu dans l'intérieur de manchon (104) afin d'amortir les vibrations du câble ; et
une première projection de fixation (119) et une deuxième projection de fixation (121), qui sont formées avec l'anneau de manchon élastique (101) en une seule pièce,
dans lequel la première saillie de fixation (119) comporte une première section de pente d'insertion (123), conçue pour glisser le long d'une première saillie de rail (167) du rail de fixation (161) lorsque la première saillie de fixation (119) est insérée à l'intérieur d'un rail (165) du rail de fixation (161), et dans lequel la première saillie de fixation (119) comporte une première gorge (125) en aval de la première section de pente d'insertion (123) dans la direction d'insertion (122), cette première gorge (125) étant conçue pour recevoir au moins une saillie de rail (167, 169) du rail de fixation (161) afin de fixer le rail de fixation (161) au niveau de l'élément d'amortissement élastique et de fixation (100),
dans lequel la seconde saillie de fixation (121) présente une seconde section de pente d'insertion (127), conçue pour glisser le long d'une seconde saillie de rail (169) du rail de fixation (161) lorsque la seconde saillie de fixation (121) est insérée à l'intérieur d'un rail (165) du rail de fixation (161), et dans lequel la seconde saillie de fixation (121) présente une seconde gorge (129) en aval de la seconde section de pente d'insertion (127) dans le sens d'insertion (122), cette seconde gorge (129) étant conçue pour recevoir au moins une saillie de rail (167, 169) du rail de fixation (161) afin de fixer ce dernier au niveau de l'élément d'amortissement élastique et de fixation (100), **caractérisé en ce que**
la première entaille (125) est formée comme une première entaille (125) entourant au moins partiellement la première projection de fixation (119), et
la deuxième contre-dépouille (129) est formée comme une deuxième contre-dépouille (129) entourant au moins partiellement la deuxième projection de fixation (121).

2. Élément élastique d'amortissement et de fixation (100) selon la revendication 1, dans lequel l'anneau de manchon élastique (101) comporte une section de fermeture (109) pour fermer l'anneau de manchon élastique (101) autour de la ligne, dans lequel en particulier une barbe (113) est formée dans une zone d'insertion (111) de la section de fermeture (109), et dans lequel en particulier une ouverture de réception (117) pour recevoir la barbe (113) est formée dans une zone de réception (115) de la section de fermeture (109).

3. Élément élastique d'amortissement et de fixation (100) selon la revendication 2, dans lequel les première et deuxième projections de fixation (119, 121) sont chacune disposées sur le côté extérieur de la zone de réception (131) de la zone de réception (115) de la section de fermeture (109), ce côté extérieur de la zone de réception (131) étant orienté à l'opposé de l'intérieur de l'anneau de manchon (104), et/ou dans lequel les première et deuxième projections de fixation (119, 121) sont espacées l'une de l'autre par un espace de projection de fixation (133) s'étendant entre les première et deuxième projections de fixation (119, 121).

4. Élément élastique d'amortissement et de fixation (100) selon la revendication 2 ou 3, dans lequel la première gorge (125) est disposée entre la première section de pente d'insertion (123) et la zone de réception (115) de la section de fermeture (109), en particulier le côté extérieur de la zone de réception (131) de la zone de réception (115) de la section de fermeture (109), et dans lequel la deuxième gorge (129) est disposée entre la deuxième section de pente d'insertion (127) et la zone de réception (115) de la section de fermeture (109), en particulier le côté extérieur de la zone de réception (131) de la zone de réception (115) de la section de fermeture (109).

5. Élément élastique d'amortissement et de fixation (100) selon l'une des revendications précédentes, dans lequel la première gorge (125) n'est pas formée sur la face intérieure (135) de la première projection de fixation (119) faisant face à la seconde projection de fixation (121), et
dans lequel la seconde contre-dépouille (129) n'est pas formée sur le côté intérieur (137) d'une seconde projection de fixation de la seconde projection de fixation (121) faisant face à la première projection de fixation (119).

6. Élément élastique d'amortissement et de fixation (100) selon l'une des revendications précédentes, dans lequel la première section de pente d'insertion (123) de la première saillie de fixation (119) présente une face interne (135) de la première saillie de fixation orientée vers la seconde saillie de fixation (121), et une face externe (139) de la première saillie de fixation opposée à la face interne (135) de cette dernière, sur cette face externe (139) est formée une première pente d'insertion (141), cette dernière étant conçue pour entrer en contact avec la première saillie de rail (167) du rail de fixation (161) lorsque la première saillie de fixation (119) est insérée dans la partie interne (165) du rail de fixation (161),
dans lequel la deuxième section de pente d'insertion (127) de la deuxième projection de fixation (121) a un côté intérieur de deuxième projection de fixation (137) faisant face à la première projection de fixation (119), dans lequel la deuxième section de pente d'insertion (127) a un côté extérieur de deuxième projection de fixation (143) faisant face à l'opposé du côté intérieur de deuxième projection de fixation (137), dans lequel le côté extérieur de deuxième projection de fixation (143) forme une deuxième pente d'insertion (145), dans laquelle la deuxième pente d'insertion (145) est adaptée pour entrer en contact avec la deuxième projection de rail (169) du rail de fixation (161) lorsque la deuxième projection de fixation (121) est insérée dans l'intérieur du rail (165) du rail de fixation (161).

7. Élément élastique d'amortissement et de fixation (100) selon l'une des revendications précédentes, dans lequel l'anneau de manchon élastique (101), et notamment ses saillies (107), s'étend en profondeur le long d'un axe longitudinal (155) parallèle à la direction longitudinale de la ligne délimitée par l'anneau de manchon élastique (101), la première section de pente d'insertion (123), et notamment la première pente d'insertion (141) de la surface extérieure (139) de la première saillie de fixation de la première section de pente d'insertion (123), s'étend en profondeur le long d'un premier axe longitudinal de pente (157), la seconde section de pente d'insertion (127), et notamment la seconde pente d'insertion (145) de la face extérieure (143) de la seconde saillie de fixation de la seconde section de pente d'insertion (127), s'étend en profondeur le long d'un second axe longitudinal de pente (159),
dans lequel les premier et deuxième axes longitudinaux de pente (157, 159) s'étendent parallèlement à l'axe longitudinal de l'anneau (155), ou dans lequel les premier et deuxième axes longitudinaux de pente (157, 159) s'étendent à un angle, en particulier à angle droit, par rapport à l'axe longitudinal de l'anneau (155).

8. Élément élastique d'amortissement et de fixation (100) selon l'une des revendications précédentes, dans lequel une pluralité d'évidements s'étendant radialement (105) sont formés dans la paroi intérieure (103), dans lequel une projection (107) s'étendant vers l' intérieur de la bague de manchon (104) est respectivement formée entre deux évidements (105) formés l'un à côté de l'autre dans la paroi intérieure (103), dans lequel les projections (107) sont adaptées pour s'appuyer contre la ligne reçue dans l'intérieur de la bague de manchon (104) afin d'amortir les vibrations de la ligne.

9. Élément élastique d'amortissement et de fixation (100) selon l'une des revendications précédentes, dans lequel l'élément d'amortissement et de fixation élastique (100) est formé d'au moins un thermoplastique, d'au moins un élastomère et/ou d'au moins un élastomère thermoplastique (TPE).

10. Élément élastique d'amortissement et de fixation (100) selon l'une des revendications précédentes, dans lequel l'anneau de manchon élastique (101) a une dureté Shore comprise entre 30 et 80 ShoreA, en particulier entre 50 et 70 ShoreA, telle que déterminée selon la norme DIN ISO 7619-1, et dans lequel les première et deuxième projections de fixation (119, 121) ont une dureté Shore comprise entre 70 et 100 ShoreA, en particulier entre 85 et 95 ShoreA, telle que déterminée selon la norme DIN ISO 7619-1.

11. Système élastique d'amortissement et de fixation (200) comprenant un élément élastique d'amortissement et de fixation (100) selon l'une des revendications précédentes et un rail de fixation (161), qui comporte un intérieur de rail (165) délimité par une paroi de rail (163) du rail de fixation (161), la paroi de rail (163) présentant une première saillie de rail (167) s'étendant dans l'intérieur de rail (165), et la paroi de rail (163) présentant une seconde saillie de rail (169) s'étendant dans l'intérieur de rail (165), la première saillie de rail (167) et la seconde saillie de rail (169) étant formées face à face dans le rail de fixation (161),
dans lequel la première projection de rail (167) est adaptée pour s'engager dans la première gorge (125) de la première projection de fixation (119) et/ou dans la deuxième gorge (129) de la deuxième projection de fixation (121), et dans lequel la deuxième projection de rail (169) est adaptée pour s'engager dans la première gorge (125) de la première projection de fixation (119) et/ou dans la deuxième gorge (129) de la deuxième projection de fixation (121).

12. Système élastique d'amortissement et de fixation (200) selon la revendication 11, comprenant en outre une ligne, qui est reçue à l'intérieur de l'anneau de manchon (104) enfermée par la paroi intérieure (103) de l'anneau de manchon élastique (101).

13. Procédé (300) de fabrication d'un élément élastique d'amortissement et de fixation (100), comprenant les étapes suivantes :
fournissant (301) au moins un plastique,
former (303) l'élément d'amortissement élastique et de fixation (100) en une seule pièce dans un outil de moulage à partir d'au moins un plastique fourni,
dans lequel l'élément d'amortissement et de fixation élastique (100) comporte un manchon élastique (101) destiné à entourer un câble, ce manchon élastique (101) présentant une paroi intérieure (103) faisant face au câble et délimitant un intérieur (104) destiné à recevoir le câble, la paroi intérieure (103) étant conçue pour venir buter contre le câble dans l'intérieur (104) du manchon afin d'amortir les vibrations de celui-ci,
dans lequel l'élément d'amortissement et de fixation élastique (100) comporte une première saillie de fixation (119) et une seconde saillie de fixation (121), formées d'une seule pièce avec la bague de manchon élastique (101), la première saillie de fixation (119) présente une première section inclinée d'insertion (123) conçue pour coulisser le long d'une première saillie de rail (167) du rail de fixation (161) lors de son insertion dans l'intérieur (165) de ce dernier. La première saillie de fixation (119) présente une première gorge (125) en aval de la première section inclinée d'insertion (123), dans le sens d'insertion (122), cette gorge (125) est conçue pour recevoir au moins une saillie de rail (167, 169) du rail de fixation (161) afin de fixer ce dernier à l'élément d'amortissement et de fixation élastique (100), la seconde saillie de fixation (121) présente une seconde section de pente d'insertion (127), conçue pour glisser le long d'une seconde saillie de rail (169) du rail de fixation (161) lorsque la seconde saillie de fixation (121) est insérée à l'intérieur (165) du rail de fixation (161), et dans laquelle la seconde saillie de fixation (121) présente une seconde gorge (129) en aval de la seconde section de pente d'insertion (127) dans le sens d'insertion (122), cette seconde gorge (129) étant conçue pour recevoir au moins une saillie de rail (167, 169) du rail de fixation (161) afin de fixer ce dernier au niveau de l'élément d'amortissement élastique et de fixation (100), **caractérisée en ce que**
la première entaille (125) est formée comme une première entaille (125) entourant au moins partiellement la première projection de fixation (119), et
la deuxième contre-dépouille (129) est formée comme une deuxième contre-dépouille (129) entourant au moins partiellement la deuxième projection de fixation (121).

14. Procédé (300) selon la revendication 13, dans lequel la formation (303) de l'élément d'amortissement élastique et de fixation (100) en une seule pièce comprend l'extrusion de l'élément d'amortissement élastique et de fixation (100) dans un outil d'extrusion en une seule pièce ou le moulage par injection de l'élément d'amortissement élastique et de fixation (100) dans un moule d'injection en une seule pièce.

15. Procédé (300) selon la revendication 13 ou 14, dans lequel le formage (303) de l'élément d'amortissement élastique et de fixation (100) en une seule pièce dans l'outil de moulage comprend la fourniture de différents paramètres de machine et de processus, notamment la fourniture de différentes températures et de différents volumes, dans différentes zones de l'outil de moulage, de sorte que différentes zones avec des duretés Shore et des duretés de matériau différentes déterminées selon la norme DIN ISO 7619-1 sont présentes dans l'élément d'amortissement élastique et de fixation (100) produit.
